(19) Europäisches Patentamt
European Patent Office
Office européen des brevets

(11) **EP 2 629 437 A1**

(12) **EUROPEAN PATENT APPLICATION**
published in accordance with Art. 153(4) EPC

(43) Date of publication:
**21.08.2013 Bulletin 2013/34**

(51) Int Cl.:
**H04B 7/15** *(2006.01)*  **H04W 16/26** *(2009.01)*
**H04W 28/06** *(2009.01)*  **H04W 56/00** *(2009.01)*
**H04W 74/06** *(2009.01)*

(21) Application number: **11832252.8**

(22) Date of filing: **06.09.2011**

(86) International application number:
**PCT/JP2011/004994**

(87) International publication number:
**WO 2012/049806 (19.04.2012 Gazette 2012/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2010 JP 2010229418**

(71) Applicant: **Panasonic Corporation
Osaka 571-8501 (JP)**

(72) Inventors:
• **YAMAMOTO, Masahiro
Osaka 540-6207 (JP)**

• **HORIIKE, Yoshio
Osaka 540-6207 (JP)**
• **KOBA, Yasuo
Osaka 540-6207 (JP)**
• **WATANABE, Takashi
Osaka 540-6207 (JP)**

(74) Representative: **Schwabe - Sandmair - Marx
Patentanwälte
Stuntzstraße 16
81677 München (DE)**

(54) **WIRELESS COMMUNICATIONS SYSTEM**

(57)    In a radio communication system of the present invention, a second radio relay terminal (221) can receive terminal calling data from a radio adapter terminal (301) in a lower layer of the just second radio relay terminal (221), after it transmits a beacon signal to the radio adapter terminal (301). The second radio relay terminal (221) can receive a beacon signal from a first radio relay terminal (211) soon after it receives the terminal calling data, and transmit the terminal calling data to the first radio relay terminal (211) just after it receives the beacon signal. Thus, it becomes possible to suppress a significant delay in relay transmission of the terminal calling data, and implement quick radio communication.

Fig. 5

EP 2 629 437 A1

**Description**

**Technical Field**

The present invention relates to a radio (wireless) communication system comprising at least a radio access point terminal, a radio relay terminal, and a radio adapter terminal. Particularly, the present invention relates to a radio communication system configured in such a manner that the radio access point terminal and the radio relay terminal are able to transmit beacon signals, and the radio relay terminal and the radio adapter terminal are able to receive the beacon signal transmitted from the radio access point terminal or the radio relay terminal and synchronize a clock of each of the radio relay terminal and the radio adapter terminal with a clock of the radio terminal as a transmission source.

**Background Art**

In the radio communication system including at least the radio access point terminal, the radio relay terminal, and the radio adapter terminal, the radio access point terminal is able to perform radio communication with many radio adapter terminals. However, depending on a location of the radio adapter terminal, the radio access point terminal cannot directly perform radio communication with the radio adapter terminal, in some cases. In these cases, the radio relay terminal which relay-transmits the radio signal is employed. One or two or more radio relay tenninal(s) intervene(s) between the radio access point terminal and a desired radio adapter terminal.

Radio adapter terminals having various configurations are known. Regarding an electric power supply, there is a radio adapter terminal which has a built-in battery as an electric power supply (is battery-driven). The radio adapter terminal which is battery-driven is typically configured to intermittently await reception of a radio signal from the radio access point terminal or the radio relay terminal, to lessen electric power consumption in the radio adapter terminal.

In the radio communication system including such a radio adapter terminal, the radio access point terminal or the radio relay terminal (upper device) transmits the beacon signal regularly, and the radio adapter terminal (lower device) receives the beacon signal regularly. The radio access point terminal, the radio relay terminal, and the radio adapter terminal contain clocks, respectively. The radio adapter terminal (or radio relay terminal as a lower device) synchronizes the clock of itself with the clock of the radio terminal (radio access point terminal or radio adapter terminal) as the transmission source of the beacon signal, upon reception of the beacon signal (a synchronization of the clocks). The radio adapter terminal intermittently awaits reception of polling data from the radio access point terminal at a predetermined timing after the synchronization of the clocks. This radio communication method (so-called synchronization method) has an advantage that power saving in the radio adapter terminal can achieved.

As an example of the radio communication system which employs the synchronization method, there is a fire alarm system disclosed in Patent Literature 1. This fire alarm system includes a fire alarm device as a master station (radio access point terminal), a fire alarm device as a slave station (radio adapter terminal), and a relay device (radio relay terminal) which relays a radio signal communicated between these fire alarm devices. The fire alarm device as the master station transmits a fire alarm message to the fire alarm device as the slave station, or receives a fire alarm message from one of slave stations, and then transmits a first synchronization signal (beacon signal) in fixed cycles.

In the technique disclosed in Patent Literature 1, the fire alarm device as the master station repetitively transmits the first synchronization signal containing the fire alarm message in fixed cycles. Receiving the first synchronization signal from the fire alarm device as the master station, the relay device transmits a second synchronization signal having the same cycle as the first synchronization signal. During reception of the fire alarm message from the fire alarm device as the master station (i.e., during reception of the first synchronization signal containing the fire alarm message), the relay device relay-transmits the second synchronization signal containing the fire alarm message to the fire alarm device as the slave station.

In other words, in the fire alarm system disclosed in Patent Literature 1, the beacon signal (second synchronization signal) from the radio relay terminal (relay device) is transmitted just after the beacon signal (first synchronization signal) is transmitted from the radio access point terminal (fire alarm device as the master station), and the synchronization of the clock in the radio terminal as the lower device is performed based on this. Polling data (fire alarm message) from the radio access point terminal is superposed on the beacon signal (first synchronization signal) from the radio access point terminal, and is superposed on the beacon signal (second synchronization signal) from the radio relay terminal.

Therefore, the radio adapter terminal receives the beacon signal (second synchronization signal) transmitted from the radio relay terminal, and thereby can receive the polling data from radio access point terminal. In this configuration, it becomes possible to transmit the polling data without a significant delay from the radio access point terminal to the radio adapter terminal, even when the radio relay terminal intervenes between the radio access point terminal and the radio adapter terminal.

In the technique disclosed in Patent Literature 1, the fire alarm device as the slave station sends back a response message for confirmation of the reception, upon reception of the fire alarm message. In the case where the relay device intervenes between the slave station and the master station, the response message from the slave station is transmitted to the master station via the relay device.

In other words, terminal information generated in the radio adapter terminal (fire alarm device as the slave station) is transmitted to the radio access point terminal (fire alarm device as the master station) as terminal calling data (response message) via the radio relay terminal (relay device).

In the technique disclosed in Patent Literature 1, the fire alarm device as the master station contains an order of frames at a head of the radio signal to be transmitted and received. By comparison, the fire alarm device as the slave station estimates a timing at which switching to a reception state in the master station occurs based on the order of frames contained in the received radio signal. The timing of the switching is estimated in the same manner in the case where the relay device acts as the slave station.

In other words, the radio access point terminal (fire alarm device as the master station) manages (order of frames) about the timing when the radio adapter terminal (fire alarm device as the slave station) should transmit the terminal calling data (response message). The radio adapter terminal transmits the terminal calling data at the timing (timing estimated based on the order of frames) commanded by the radio access point terminal. Likewise, the radio access point terminal manages the timing of transmission from the radio relay terminal (relay device) to the radio access point terminal. The radio relay terminal (relay device) relay-transmits the terminal calling data at the timing commanded by the radio access point terminal.

In the technique disclosed in Patent Literature 1, in the slave station, a period for which the master station is placed in the reception state is divided into a plurality of time slots, and a radio signal containing the response message is contained in a specified time slot decided for each slave station (or relay device). The slave station sends back the radio signal to the master station. This time slot is defined by the first synchronization signal. One cycle of the first synchronization signal is divided into a plurality of time slots.

In other words, in the radio access point terminal, a transmission interval of the beacon signal (first synchronization signal) transmitted from itself is divided into a plurality of time slots, and one time slot is assigned to the radio terminal as the lower device (radio adapter terminal or radio relay terminal). Each lower device (radio adapter terminal or radio relay terminal) transmits the radio signal at the assigned specified time slot.

**Citation Lists**

**Patent Literature**

Patent Literature 1: Japanese Laid-Open Patent Application Publication No. 2009-288897

**Summary of the Invention**

**Technical Problem**

However, in the technique disclosed in Patent Literature 1, it is possible to avoid a significant delay occurring in transmission of the palling data from radio access point terminal to the radio adapter terminal, but a significant delay may occur in transmission of the terminal calling data. In addition, the number of times the radio adapter terminal receives the polling data may increase, and electric power consumption in the radio adapter terminal may increase.

Specifically, the terminal calling data generated in the radio adapter terminal is transmitted at a predetermined transmission timing (i.e., predetermined time slot) and received in the radio relay terminal. If the transmission timing (predetermined time slot) of the radio relay terminal has already passed, the radio relay terminal must be in a standby state in which relay-transmission of the terminal calling data is deferred during a period from when it receives a next beacon signal (first synchronization signal) from the radio access point terminal until a predetermine time slot arrives. That is, the terminal calling data from the radio adapter terminal would be relay-transmitted to the radio access point terminal with a delay of one or more transmission cycle(s) of the beacon signal, which may result in a significant delay in transmission of the terminal calling data.

In the technique disclosed in Patent Literature 1, the polling signal is superposed on the beacon signal to avoid a significant delay occurring in the transmission of the polling data. Because of this, the radio adapter terminal receives the beacon signal in the same cycle as that of the beacon signal (first synchronization signal or second synchronization signal) transmitted regularly from the upper device (radio access point terminal or radio relay terminal). As a result, the radio adapter terminal may receive the beacon signal with a frequency which is more than necessary, which may increase electric power consumption in the radio adapter terminal.

The present invention is directed to solving the above described problems, and an object of the present invention is to provide a radio communication system which is capable of suppressing or avoiding a significant delay in relay-transmission of terminal calling data from a radio adapter terminal to a radio access point terminal, while suppressing an increase in electric power consumption in the radio adapter terminal, with a simple configuration.

**Solution to Problem**

To achieve the above described object, there is provided a radio communication system of the present invention comprising a plurality of radio communication devices including a plurality of radio adapter terminals which are in a lowermost layer, a radio access point terminal in an uppermost layer which performs radio communication with the radio adapter terminal, and a radio relay terminal which intervenes between the radio adapter terminals and the radio access point terminal, and performs communication with the radio adapter terminals and the radio access point terminal; wherein each of the radio access point terminal and the radio relay terminal is configured to transmit a beacon signal regularly to a radio communication device in a lower layer of the radio access point terminal and the radio relay terminal, each of the radio relay terminal and the radio adapter terminals is configured to regularly receive the beacon signal transmitted from a radio communication device in an upper layer of the radio relay terminal and the radio adapter terminal, and synchronize an internal clock of each of the radio relay terminal and the radio adapter terminals with an internal clock of the radio communication device in the upper layer; when a time period that elapses from an initial upper beacon transmission time point which is a time point when the radio access point terminal or the radio relay terminal transmits the beacon signal until a lower beacon transmission time point which is a time point when the radio relay terminal in a lower layer of the radio access point terminal or the radio relay terminal transmits the beacon signal, firstly after the initial upper beacon transmission time point is a first beacon transmission interval, and a time period that elapses from the lower beacon transmission time point until a subsequent upper beacon transmission time point which is a time point when the radio access point terminal or the radio relay terminal in an upper layer of the radio relay terminal in the lower layer transmits the beacon signal firstly after the lower beacon transmission time point is a second beacon transmission interval, the first beacon transmission interval is set longer than the second beacon transmission interval.

The above and further objects, features and advantages of the present invention will more fully be apparent from the following detailed description of preferred embodiments with accompanying drawings.

**Advantageous Effects of the Invention**

As described above, it is possible to provide a radio communication system which is capable of suppressing or avoiding a significant delay in relay-transmission of terminal calling data from a radio adapter terminal to a radio access point terminal, while suppressing an increase in electric power consumption in the radio adapter terminal, with a simple configuration.

**Brief Description Drawings**

[Fig. 1] Figs. 1A to 1C are block diagrams showing an example of a configuration of main components in a radio communication device according to an embodiment of the present invention.

[Fig. 2] Fig. 2 is a schematic view showing an example of a configuration of a radio communication system using the radio communication device of Fig. 1.

[Fig. 3] Fig. 3A is a schematic view showing a basic configuration of a time slot managed in each of the radio communication devices of Figs. 1A to 1C, and Fig. 3B is a schematic view showing a configuration of a link connection slot in the time slot of Fig. 3A.

[Fig. 4] Fig. 4 is a schematic view showing a relationship between slot positions between the radio communication devices of Fig. 2.

[Fig. 5] Fig. 5 is a schematic view showing a relationship between slot positions between the radio communication devices of Fig. 4.

[Fig. 6] Fig. 6 is a schematic view showing an example of relay-transmission in a case where a radio access point terminal transmits data to a radio adapter terminal in the radio communication system having the relationship of the slot positions of Fig. 4.

[Fig. 7] Fig. 7A is a schematic view showing an example of a configuration of a link connection request signal transmitted/received between the radio communication devices constructing the radio communication system of Fig. 2, and Fig. 7B is a schematic view showing an example of a configuration of one repeated frame contained in the link connection request signal of Fig. 7A.

[Fig. 8] Fig. 8 is a timing chart showing an example of a timing at which the link connection request signal of Fig. 7A is received and a reception carrier sense operation is performed.

[Fig. 9] Fig. 9 is a schematic view showing an example of relay-transmission which takes place in a case where the radio adapter terminal transmits data to the radio access point terminal in the radio communication system having the relationship of the slot positions of Fig. 4.

[Fig. 10] Fig. 10 is a timing chart showing an example of communication of a radio signal in a case where a radio adapter terminal newly joins the radio communication system having the relationship of the slot positions of Fig. 4.

[Fig. 11] Fig. 11 is a schematic view showing an example of a format of a data communication signal to be transmitted/ received between the radio communication devices constructing the radio communication system of Fig. 2.

[Fig. 12] Fig. 12A is a schematic view showing an example of a configuration of route information contained in the data communication signal of Fig. 11, Fig. 12B is a schematic view showing an example of a configuration of relay terminal information stored from first byte to seventh byte in the route information of Fig. 12A, Fig. 12C is a schematic view showing an example of slot position information stored in eighth byte in the route information of Fig. 12A.

**Description of Embodiments**

According to the present invention, there is provided a radio communication system of the present invention comprising a plurality of radio communication devices including a plurality of radio adapter terminals which are in a lowermost layer, a radio access point terminal in an uppermost layer which performs radio communication with the radio adapter terminals, and a radio relay terminal which intervenes between the radio adapter terminals and the radio access point terminal, and performs communication with the radio adapter terminals and the radio access point terminal; wherein each of the radio access point terminal and the radio relay terminal is configured to transmit a beacon signal regularly to a radio communication device in a lower layer of the radio access point terminal and the radio relay terminal, each of the radio relay terminal and the radio adapter terminals is configured to regularly receive the beacon signal transmitted from a radio communication device in an upper layer of the radio relay terminal and the radio adapter terminal, and synchronize an internal clock of each of the radio relay terminal and the radio adapter terminals with an internal clock of the radio communication device in the upper layer; when a time period that elapses from an initial upper beacon transmission time point which is a time point when the radio access point terminal or the radio relay terminal transmits the beacon signal until a lower beacon transmission time point which is a time point when the radio relay terminal in a lower layer of the radio access point terminal or the radio relay terminal transmits the beacon signal, firstly after the initial upper beacon transmission time point is a first beacon transmission interval, and a time period that elapses from the lower beacon transmission time point until a subsequent upper beacon transmission time point which is a time point when the radio access point terminal or the radio relay terminal in an upper layer of the radio relay terminal in the lower layer transmits the beacon signal firstly, after the lower beacon transmission time point is a second beacon transmission interval, the first beacon transmission interval is set longer than the second beacon transmission interval.

In accordance with this configuration, since the first beacon transmission interval is set longer than the second beacon transmission interval, the radio relay terminal in the lower layer enters a state in which it can communicate with a radio communication device in the lower layer just after it transmits the beacon signal to the radio communication device in a lower layer, and enters a state in which it can communicate with a radio communication device in an upper layer just after it receives the beacon signal from the radio communication device in the upper layer.

Therefore, the radio relay terminal in the lower layer can receive the terminal calling data from the radio adapter terminal just after it transmits the beacon signal to the radio communication device in the lower layer. This enables the radio relay terminal to relay-transmit the terminal calling data according to the timing when the radio adapter terminal transmits the terminal calling data. As a result, an activation time of the radio adapter terminal can be reduced, and hence an increase in electric power consumption in the radio adapter terminal can be suppressed with a simple configuration.

In addition, the radio relay terminal in the lower layer can receive the beacon signal transmitted from the radio communication device in the upper layer soon after it receives the terminal calling data, and transmit the terminal calling data to the radio communication device in the upper layer just after it receives the beacon signal. Thus, it becomes possible to suppress a significant delay in relay transmission of the terminal calling data, and implement quick radio communication.

In the radio communication system, the radio communication performed between the radio communication device in the upper layer and the radio communication device in the lower layer may be performed cyclically by repeating one cycle divided into a plurality of time slots; each of the time slots may be composed of a lower slot in which the radio communication with the radio communication device in the lower layer is performed, and an upper slot following the lower slot, the radio communication with the radio communication device in the upper layer being performed in the upper slot; the lower slot includes a beacon transmission slot in which the beacon signal is transmitted, and a link connection slot following the beacon transmission slot, a link connection with the radio communication device in the lower layer being performed in the link connection slot; the upper slot may include a beacon reception slot in which the beacon signal is received, and a link connection slot following the beacon reception slot, a link connection with the radio communication device in the upper layer being performed in the link connection slot; when the radio relay terminal which is in the upper layer of the radio adapter terminal is a reference terminal, a cycle of the radio communication of the radio communication device in the upper layer, a cycle of the radio communication of the reference terminal, and a cycle of the radio communication of the radio adapter terminal are set such that the lower slot of the reference terminal corresponds to the upper slot of the radio adapter terminal, and the upper slot of the reference terminal corresponds to the lower slot of the radio communication device in the upper layer.

In accordance with the configuration, the first beacon transmission interval and the second beacon transmission interval can be set according to a particular time slot.

In the radio communication system, the radio relay terminal may be configured to perform link connection in the lower slot in which the radio relay terminal transmits the beacon signal; and wherein when the radio communication device in an upper layer of the reference terminal is the radio relay terminal, a cycle of the radio communication of the radio relay terminal in the upper layer, a cycle of the radio communication of the reference terminal, and a cycle of the radio communication of the radio adapter terminal may be set such that the lower slot in which the reference terminal performs the link connection corresponds to the upper slot in which the radio adapter terminal performs link connection, and the upper slot of the reference terminal corresponds to the lower slot in which the radio relay terminal in the upper layer performs the link connection.

In accordance with this configuration, the upper slot and the lower slot in which the link connection is performed correspond to each other among the reference terminal, the radio communication device in the upper layer and the radio communication device in the lower layer. Therefore, a link connection interval between the radio communication devices can be reduced as short as possible.

In the radio communication system, the radio adapter terminal may be configured to perform link connection once in every plural upper slots; and a cycle of the radio communication of the reference terminal and a cycle of the radio communication of the radio adapter terminal may be set such that the lower slot of the reference terminal corresponds to the upper slot in which the radio adapter terminal performs link connection in a most recent time.

In accordance with this configuration, even when the radio adapter terminal performs the link connection in some of the time slots (such that time slots are skipped), the radio communication can be performed quickly in a range from the radio access point terminal in the uppermost layer to the radio relay terminal in the upper layer of the radio adapter terminal.

In the radio communication system having the above configuration, the radio relay terminal other than the radio relay terminal in an upper layer of the radio adapter terminal may be configured to perform the link connection between the lower slot of the radio relay terminal other than the radio relay terminal in the upper layer and the upper slot of the radio communication device in a lower layer of the radio relay terminal other than the radio relay terminal in the upper layer, just after the link connection is performed between the lower slot of the radio communication device in an upper layer of the radio relay terminal other than the radio relay terminal in the upper layer and the upper slot of the radio relay terminal other than the radio relay terminal in the upper layer.

In accordance with this configuration, the link connection with the radio communication device in the lower layer can be performed soon after the link connection with the radio communication device in the upper layer is performed. Therefore, the radio communication can be performed quickly in a range from the radio access point terminal in the uppermost layer to the radio relay terminal in the upper layer of the radio adapter terminal.

In the radio communication system having the above configuration, each of the radio relay terminal and the radio adapter terminal may be configured to regularly perform an intermittent reception awaiting operation to receive the radio signal from the radio access point terminal or the radio relay terminal in an upper layer, and an intermittent reception awaiting cycle of the radio adapter terminal is longer than an intermittent reception cycle of the radio relay terminal.

Since the radio relay terminal awaits reception of the polling data from the radio access point terminal in cycles shorter than those of the beacon signal transmitted from the radio access point terminal, the relay-transmission can be carried out without a significant delay in the relay-transmission of the polling data.

Hereinafter, preferred embodiments of the present invention will be described with reference to the drawings. Throughout the drawings, the same or corresponding components are designated by the same reference symbols, and will not be described in repetition.

**[Schematic configuration of radio communication device]**

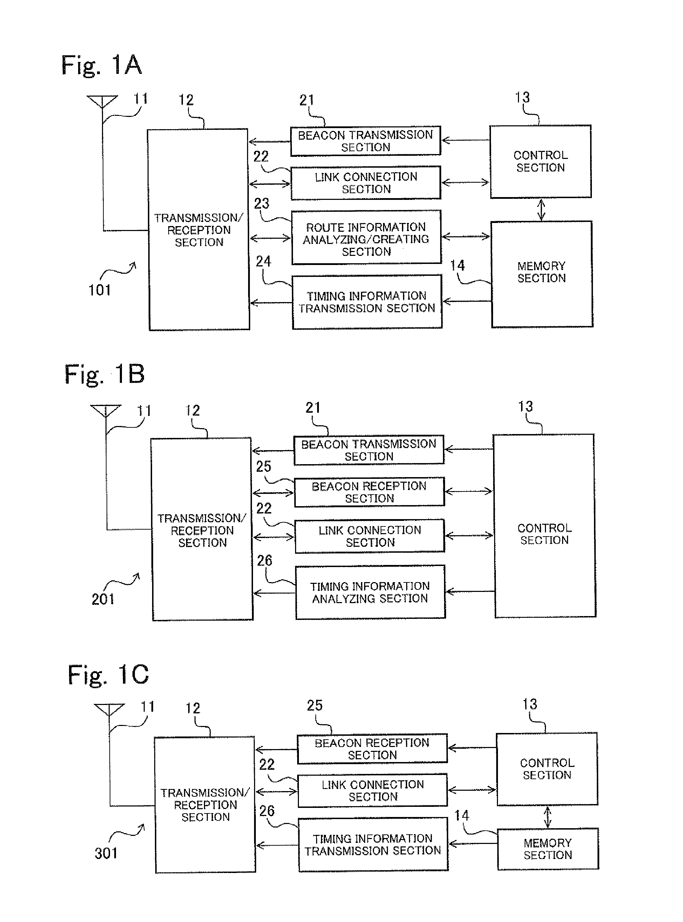

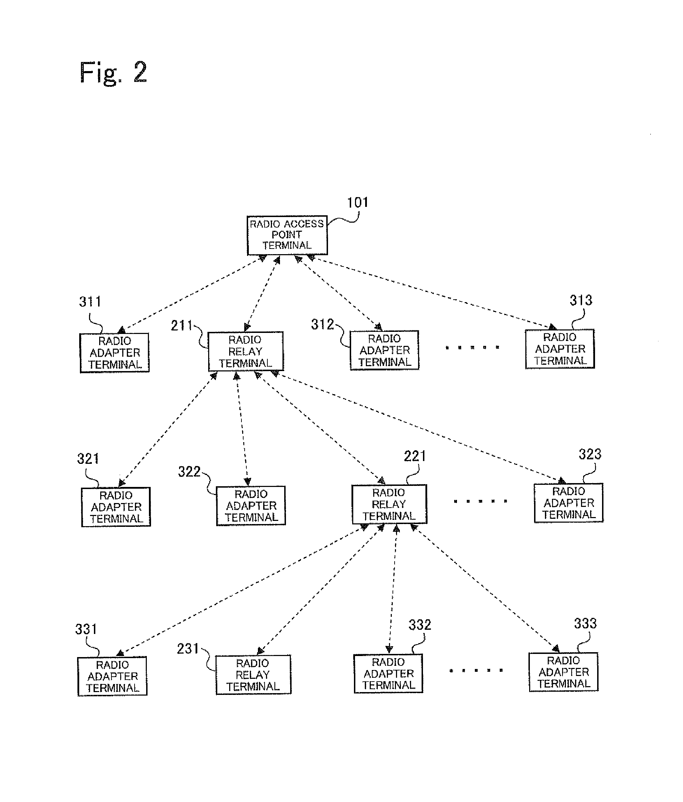

Figs. 1A to 1C are block diagrams showing an example of a configuration of main components in a radio communication device according to Embodiment 1 of the present invention. Fig. 1A shows an example of a configuration of a radio communication device which serves as a radio access point terminal. Fig. 1B shows an example of a configuration of a radio communication device which serves as a radio relay terminal. Fig. 1C shows an example of a configuration of a radio communication device which serves as a radio adapter terminal. Fig. 2 is a schematic view showing an example of a configuration of a radio communication system using the radio communication device of Fig. 1.

First of all, the schematic configuration of the radio communication device of the present embodiment will be described. As shown in Fig. 1A, a radio access point terminal 101 which is one example of the radio communication device of the present embodiment includes an antenna 11, a transmission/reception section 12, a control section 13, a memory section 14, a beacon transmission section 21, a link connection section 22, a route information analyzing/creating section 23, and a timing information transmission section 24.

The antenna 11 is not particularly limited so long as it is capable of transmitting/receiving an electric wave in a predetermined band. As the antenna 11, a known antenna capable of transmitting/receiving an electric wave in a band defined according to public standard may be used. The transmission/reception section 12 is configured as a radio transmission/reception circuit which modulates data into a radio signal in a specified band or demodulates the radio signal in the specified band into the data to transmit the electric wave from the antenna 11 in the air or receive the electric wave transmitted in the air. A specific configuration of the transmission/reception section 12 is not particularly limited, and a radio frequency circuit (RF circuit) known in the field of a radio (wireless) communication network is used.

The control section 13 is constituted by, for example, a CPU of a microcomputer, and performs control processes relating to the operation of the radio access point terminal 101 (radio communication device), in particular, radio communication operation of the radio access point terminal 101. For example, the control section 13 performs overall time management of the radio access point terminal 101, and controls the transmission/reception section 12, the beacon transmission section 21, the link connection section 22, the route information analyzing/creating section 23, and the timing information transmission section 24. From the memory section 14, information stored in association with the control performed by the control section 13 are read. The memory section 14 may be configured as an internal memory of the CPU, or an independent memory device.

The control section 13 causes the beacon transmission section 21 to transmit a beacon signal to another radio communication device (radio relay terminal 201, radio adapter terminal 301 as will be described later). The control section 13 causes the link connection section 22 to transmit a link connection request signal to another radio communication device to connect a radio link (link connection operation). The route information analyzing/creating section 23 analyzes and creates route information containing information (relay terminal information) relating to the radio relay terminal 201 for which a relay request was made. The timing information transmission section 24 creates and transmits information (intermittent reception timing information) which identifies an intermittent reception timing in the radio adapter terminal 301.

In the present embodiment, the intermittent reception timing information is a slot position information as will be described later. The route information contains the slot position information in addition to the relay terminal information. The relay terminal information, the slot position information and the route information will be described later. The memory section 14 is able to store the route information containing the slot position information and the relay terminal information and various information relating to the route information.

Specific configurations of the beacon transmission section 21, the link connection section 22, the route information analyzing/creating section 23, and the timing information transmission section 24 are not particularly limited. The beacon transmission section 21, the link connection section 22, the route information analyzing/creating section 23, and the timing information transmission section 24 may be each configured as a logic circuit or the like including a known switching element, a subtractor, a comparator, etc., or may be a functional configuration of the control section 13 and may be implemented by the operation of the CPU as the control section 13 according to the programs stored in the memory section 14.

As shown in Fig. 1B, a radio relay terminal 201 which is one example of the radio communication device of the present embodiment includes an antenna 11, a transmission/reception section 12, a control section 13, a beacon transmission section 21, a beacon reception section 25, a link connection section 22, and a timing information analyzing section 26.

Specific configurations of the antenna 11, the transmission/reception section 12, the control section 13, the beacon transmission section 21, and the link connection section 22 are identical to those of the radio access point terminal 101, and will not be described in repetition. When the radio relay terminal 201 receives a radio signal transmitted from the radio access point terminal 101, the link connection section 22 performs a link connection operation by receiving the link connection request signal. The beacon reception section 25 receives the beacon signal transmitted from the radio access point terminal 101 and outputs the beacon signal to the control section 13. The timing information analyzing section 26 analyzes and creates route information containing the slot position information. The beacon reception section 25 and the timing information analyzing section 26 may be each configured as a logic circuit, etc., or may be a functional configuration of the control section 13.

As shown in Fig. 1C, a radio adapter terminal 301 which is one example of the radio communication device of the present embodiment includes an antenna 11, a transmission/reception section 12, a control section 13, a memory section 14, a beacon reception section 25, a link connection section 22, and a timing information transmission section 24. Specific configurations of the antenna 11, the transmission/reception section 12, the control section 13, the memory section 14, the beacon transmission section 21,the link connection section 22 and the timing information transmission section 24 are identical to those of the radio access point terminal 101 or the radio relay terminal 201, and will not be described in repetition.

**[schematic configuration of radio communication system]**

Next, a schematic configuration of the radio communication system of the present embodiment will be described. As shown in Fig. 2, the radio communication system of the present embodiment includes as radio communication devices the radio access point terminal 101, radio relay terminals 211, 221, and 231 and radio adapter terminals 311~313, 321~323, and 331~333. The radio relay terminals 211, 221, and 231 in Fig. 2 corresponds to the radio relay terminal 201 in Fig. 1B. The radio adapter terminals 311~313, 321~323, and 331~333 correspond to the radio adapter terminal 301 in Fig. 1C.

Although one radio access point terminal 101, three radio relay terminals 201 (radio relay terminals 211, 221, and 231) and nine radio adapter terminals 301 (radio adapter terminals 311~313, 321~323, and 331~333) are illustrated in Fig. 2 for the sake of convenience, the configuration of the radio communication system is not limited to this. The radio communication devices may be greater or less in number than those illustrated in Fig. 2.

The radio access point terminal 101 and the radio relay terminals 211, 221, and 231 are radio communication devices which transmit the beacon signal. The radio relay terminals 211, 221, and 231 and the radio adapter terminals 311~313, 321~323, and 331~ 333 are radio communication devices which receive the beacon signal. That is, the radio relay terminals 211, 221, and 231 are radio communication devices which are capable of transmitting/receiving the beacon signal.

The radio access point terminal 101 is capable of transmitting the beacon signal to each of the radio adapter terminals 311~313 and the radio relay terminal 211 and communicating data with the radio adapter terminals 311~313 and the radio relay terminal 211 via radio (wirelessly). In Fig. 2, these radio communication devices are connected together by means of bidirectional dotted-line arrows. The radio access point terminal 101, the radio adapter terminals 311~313 and the radio relay terminal 211 construct a network in a first layer in the radio communication system. The radio access point terminal 101 is an "upper device" from the perspective of the radio adapter terminals 311~313 and the radio relay terminal 211. The radio adapter terminals 311~313 and the radio relay terminal 211 which are directly connected to the radio access point terminal 101 which is the upper device is "lower device" from the perspective of the radio access point terminal 101.

The radio relay terminal 211 is capable of transmitting the beacon signal to each of the radio adapter terminals 321~323 and the radio relay terminal 221 and communicating data with the radio adapter terminals 321~323 and the radio relay terminal 221. Therefore, the radio relay terminal 211 is "lower device" from the perspective of the radio access point terminal 101, while the radio relay terminal 211 is "upper device" from the perspective of the radio adapter terminals 321~323 and the radio relay terminal 221. Like the network in the first layer, the radio relay terminal 211, the radio adapter terminals 321~323 and the radio relay terminal 221 construct a network in a second layer in the radio communication system.

In the same manner, the radio relay terminal 221 is capable of transmitting the beacon signal to each of the radio adapter terminals 331~333 and the radio relay terminal 231 and communicating data with the radio adapter terminals 331~333 and the radio relay terminal 231. Therefore, the radio relay terminal 221 is "lower device" from the perspective of the radio relay terminal 211, while the radio relay terminal 221 is "upper device" from the perspective of the radio adapter terminals 331~333 and the radio relay terminal 231. Thus, the radio relay terminal 221, the radio adapter terminals 331~333 and the radio relay terminal 231 construct a network in a third layer in the radio communication system.

The radio relay terminal 231 is capable of transmitting the beacon signal to each of a plurality of radio adapter terminals 301 (not shown in Fig. 2), or a plurality of radio adapter terminals 301 and one or more radio relay terminals 201 (not shown in Fig. 2), and communicating data with these radio communication devices. The radio relay terminal 231, the radio adapter terminals 301 (not shown in Fig. 2), and the radio relay terminals 201 (not shown in Fig. 2) can construct a network in a fourth layer in the radio communication system. In addition, they can construct networks in the fifth and following layers assuming the radio relay terminal 201 (not shown in Fig. 2), as the upper device. If the radio relay terminal 201 is not included in the network in the fourth layer, the radio communication system of Fig. 2 is constructed of only the first to fourth networks.

An outline of the communication operation in the radio communication system having the above configuration will be described. It is assumed that the radio access point terminal 101 can directly perform communication with the radio adapter terminals 311~313 but cannot directly perform communication with the radio adapter terminals 321~323 and the radio adapter terminals 331~333, due to bad conditions of an electric wave. Accordingly, the radio access point terminal 101 directly performs radio communication with the radio adapter terminals 321~323, the radio adapter terminals 331~333, etc., via the radio relay terminals 211, 221, 231, etc..

Therefore, the radio adapter terminals 311~313, 321~323 and 331~333 (and the radio relay terminals 211, 221, 231) are layered based on which of the radio access point terminal 101 or the radio relay terminals 211, 221, 231, they directly perform communication with, or how many radio relay terminals 201 there are up to the radio access point terminal 101, in the case where they perform communication via the radio relay terminals 211, 221, 231. For example, the radio adapter terminals 311~313 which can directly perform communication with the radio access point terminal 101 construct the first layer as described above, the radio adapter terminals 321~323 which can perform communication with the radio access point terminal 101 via one radio relay terminal 211 construct the second layer, and the radio adapter terminals 331~333 which can perform communication with the radio access point terminal 101 via the radio relay terminals 221 and 211 construct the third layer.

The radio access point terminal 101 and the radio relay terminals 211, 221, 231 are "upper devices" and intermittently transmit the beacon signal to the radio communication devices as "lower devices" (e.g., the radio adapter terminals 311~313 and the radio relay terminal 211 in the first layer). The radio communication devices as "lower devices" capture (receive) the beacon signals. Thereby, a time of a clock section (internal clock) in each of the radio communication devices as "upper devices" can be synchronized with a time of a clock section (internal clock) in each of the radio communication devices as "upper devices".

As will be described later, timing information (intermittent reception timing information) in the case where the radio communication device as "lower device" intermittently awaits reception is incorporated into a radio signal together with polling data and is transmitted to the radio communication device as "lower device". Therefore, in a configuration in which the radio relay terminal 201 is inserted between the radio access point terminal 101 and the radio adapter terminal 301 like the radio communication system shown in Fig. 2, the radio relay terminal 201 can transmit relay information at the intermittent reception timing of the radio adapter terminal 301.

**[Slot configuration of radio communication device and slot position relation]**

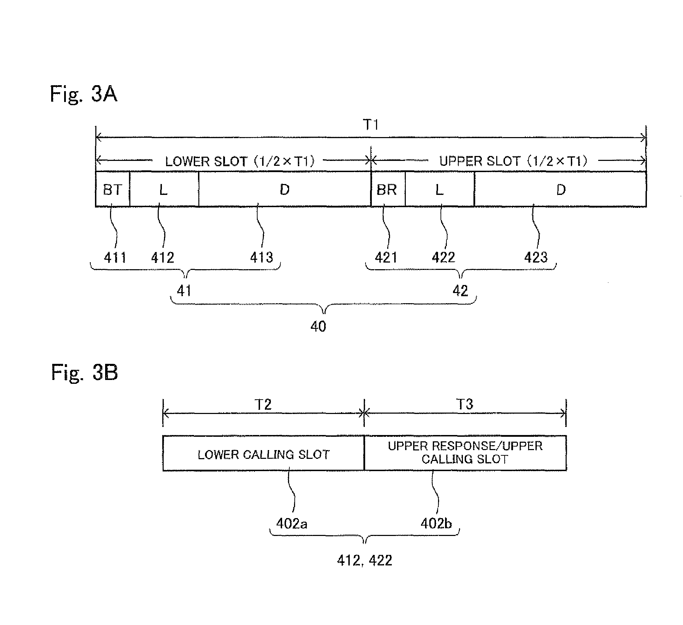

In the radio communication system of the present embodiment, data communication is performed by a time-division multiplexing method between the radio communication device as "upper device" and the radio communication device as "lower device". Therefore, one cycle of radio communication is divided into a plurality of time slots, and specified communication data (radio signal) is allocated to each of the time slots. A basic configuration of the time slots managed by the radio communication devices of Fig. 1A to 1C will be described with reference to Figs. 3A and 3B.

**(I. Basic configuration of time slots)**

In the time-division multiplexing method, radio communication is partitioned for each preset predetermined time and this predetermined time (1 cycle) is divided into a plurality of time slots. As shown in Fig. 3A, a length (slot length) of a base time slot (base slot 40) is set to T1 seconds (e.g., T1 = 2 seconds). In communication, the base slot 40 is repeated on a time axis of one cycle.

The base slot 40 is composed of two time slots which are a lower slot 41 and an upper slot 42. A slot length of the lower slot 41 and a slot length of the upper slot 42 are each set to a half ($1/2 \times T1$) of a slot length T1 of the base slot 40. The lower slot 41 is a time slot used to communicate with the lower device, while the upper slot 42 is a time slot used to communicate with the upper device.

The lower slot 41 is divided into three time slots which are a beacon transmission slot 411 (BT in Fig. 3), a link connection slot 412 (L in Fig. 3), and a data communication slot 413 (D in Fig. 3). Likewise, the upper slot 42 is divided into three time slots which are a beacon reception slot 421 (BR in Fig. 3), a link connection slot 422 (L in Fig. 3), and a data communication slot 423 (D in Fig. 3).

Next, the time slots will be described. When the radio communication device is the upper device, the beacon transmission section 21 (see Figs. 1A and 1B) regularly transmits the beacon signal to the lower device in the beacon transmission slot 411. The beacon signal may be transmitted without fail in the beacon transmission slot 411, or once in every plural beacon transmission slots 411. For example, in the case where the beacon signal is set to be transmitted once in every two beacon transmission slots 411 (transmitted once in every two slots), a transmission interval of the beacon signal is 4 seconds when T1 = 2 seconds.

When the radio communication device is the lower device, the beacon reception section 25 (see Figs. 1B and 1C) regularly receives the beacon signal from the upper device in the beacon reception slot 421. A reception interval of the beacon signal can be set to an integral multiple of the transmission interval of the beacon signal. For example, when the transmission interval is set to 2 seconds and the reception interval is set to 256 times of the transmission interval, the reception interval is 8 minutes 32 seconds.

Regardless of whether the radio communication device is the upper device or the lower device, the link connection section 22 (see Figs. 1A to 1C) performs the link connection operation in the link connection slot 412, 422. Data communication between the radio communication devices takes place after the link connection operation. The data communication takes place in the data communication slot 413, 423 following the link connection slot 412, 422, respectively.

As shown in Fig. 3B, the link connection slot 412, 422 is composed of two time slots which are a lower calling slot 402a and an upper response/upper calling slot 402b. The lower calling slot 402a is a time slot in which the lower device transmits a link connection request signal when the lower device wishes to connect the radio link to the upper device. The upper response/upper calling slot 402b is a time slot in which the upper device sends a response in response to the link connection request signal from the lower device, and the upper device transmits a link connection request signal when the upper device wishes to connect the radio link to the lower device.

A slot length of the link connection slot 412, 422 is not particularly limited. In the example of Fig. 3B, a slot length of the lower calling slot 402a is set to T2, while a slot length of the upper response/upper calling slot 402b is set to T3. Although the slot length T2 and the slot length T3 are substantially equal length (T2 = T3) in Fig. 3B, the present invention is not limited to this, but a suitable slot length may be set according to the transmission of the link connection request signal or a response to the link connection request signal.

**(II. Position relationship of time slots)**

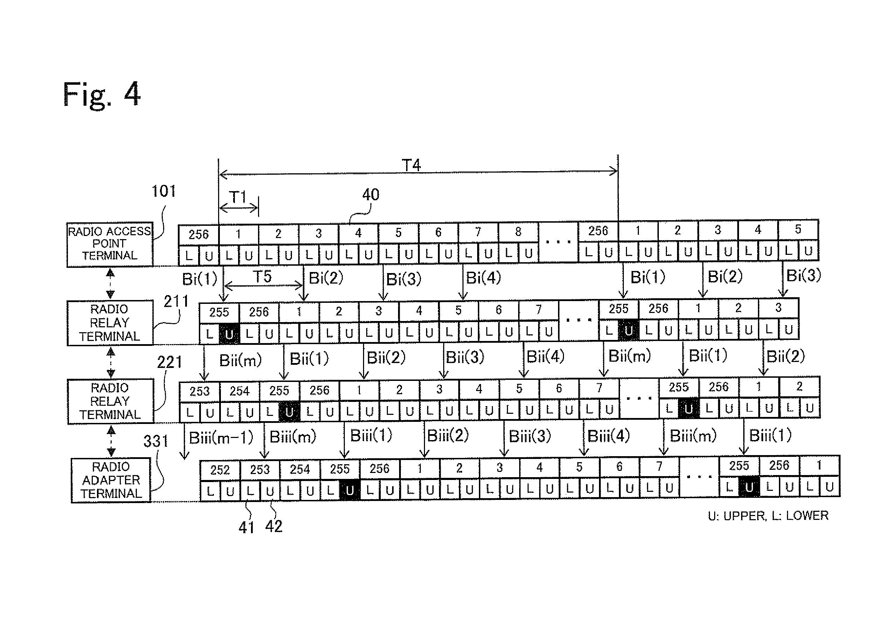

Next, the position relationship of the time slots between the upper device and the lower device in the radio communication system of the present embodiment will be described specifically with reference to Fig. 4. Fig. 4 shows the position relationship of the time slots between the radio communication devices within one cycle in a case where the two radio relay terminals 211, 221 are present between the radio access point terminal 101 and the radio adapter terminal 331 in the third layer in the radio communication system of Fig. 2. In the base slot 40 of Fig. 4, the lower slots 41 are depicted as "L" and the upper slots 42 are depicted as "U".

In the example of Fig. 4, in the radio access point terminal 101, the radio relay terminals 211, 221 and the radio adapter terminal 331, one cycle is divided into 256 base slots 40. The base slots 40 are assigned with slot numbers from 1 to 256. After the base slot 40 assigned with the final slot number 256, the base slot 40 assigned with the first slot number 1 is present. Hereinafter, for easier explanation, the base slot 40 of the slot number X is expressed as "No. X -base slot 40." In the description of Fig. 4, to clearly distinguish between the upper radio relay terminal 211 and the lower radio relay terminal 221, the former will be referred to as "first radio relay terminal 211" and the latter will be referred to as "second radio relay terminal 221."

In the example of Fig. 4, between the radio access point terminal 101 and the first radio relay terminal 211, a beacon signal Bi in the first layer is transmitted regularly. Also, between the first radio relay terminal 211 and the second radio relay terminal 221, a beacon signal Bii in the second layer is transmitted regularly. Also, between the second radio relay terminal 221 and the radio adapter terminal 331, a beacon signal Biii in the third layer is transmitted regularly. The radio adapter terminal 331 is a lowermost device and there is no lower device connected to the radio adapter terminal 331. Therefore, no beacon signal is transmitted from the radio adapter terminal 331.

The beacon signals Bi - Biii transmitted from the upper devices are received once in every cycle in the lower devices as will be described later. When a length of one cycle (cycle length) is T4, $T4 = 256 \times T1$ in the example of Fig. 4. For examples, when T1 = 2 seconds, T4 = 512 seconds (8 minutes 32 seconds). The beacon signals Bi - Biii are transmitted from the upper devices in cycles of once in every two beacon transmission slots 411. That is, the beacon signals Bi - Biii are transmitted in cycles of once in every two base slots 40, and a transmission interval T5 of the beacon signals Bi - Biii is $T5 = 2 \times T1$. For example, when T1 = 2 seconds, T5 = 4 seconds.

In Fig. 4, ordinal number of the beacon signals Bi - Biii transmitted/received within one cycle are in parentheses. For example, in the case of the beacon signal Bii in the second layer transmitted from the first radio relay terminal 211 to the second radio relay terminal 221, the first beacon signal Bii transmitted in No. 1-base slot 40 is depicted as "Bii (1)", the second beacon signal Bii transmitted in No.3-base slot 40 is depicted as "Bii(2)", and the m-th beacon signal Bii transmitted in No.255-base slot 40 is depicted as "Bii(m)".

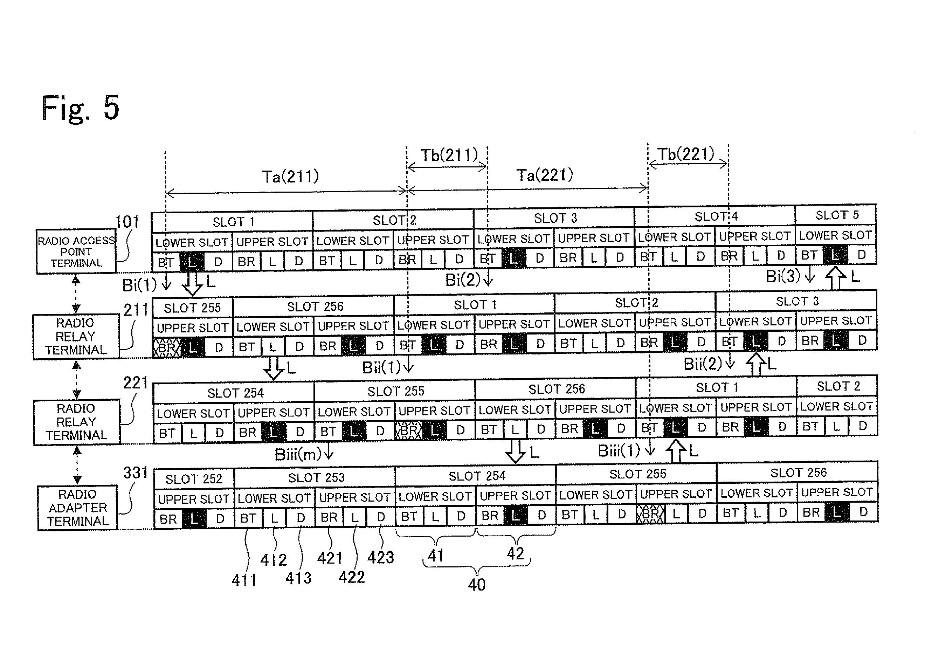

Next, transmission operation of the beacon signals Bi - Biii from the upper devices to the lower devices and reception operation of the beacon signals Bi ~ Biii in the lower devices will be described specifically, in the example of Fig. 4, with reference to Figs. 4 and 5. In the example of Fig. 5, the same positional relationship of Fig. 4 is shown, except that each of the lower slot 41 and the upper slot 42 constituting each base slot 30 is divided into three time slots of Fig. 3A.

In the example of Fig. 4 and 5, an uppermost device is the radio access point terminal 101, and the beacon signal Bi in the first layer is transmitted from the radio access point terminal 101 to the lower device regularly in cycles of $T5=2\times T1$. In the example of Fig. 4 and 5, the first beacon signal Bi(1) is transmitted from the beacon transmission slot 411 included in the lower slot 41 of No.1-base slot 40, the second beacon signal Bi(2) is transmitted from No.3-base slot 40, the third beacon signal Bi(3) is transmitted from No.5-base slot 40, and the fourth beacon signal Bi(4) is transmitted from No.7-base slot 40 (beacon signal Bi(4) is not shown in Fig. 5). Thereafter, the beacon signals Bi are transmitted sequentially from the base slots 40 of odd-number slot numbers. When a transmission order reaches No.1-base slot 40 again, the first beacon signal Bi is transmitted.

The lower device immediately below the radio access point terminal 101 is the first radio relay terminal 211. The first radio relay terminal 211 regularly receives the beacon signal Bi transmitted from the radio access point terminal 101. The beacon signal Bi is received once in every cycle. In the example of Fig. 4, the first beacon signal Bi(1) is received in the beacon reception slot 421 included in the upper slot 42 of the base slot 40. When first radio relay terminal 211 receives the beacon signal Bi (1), a slot position of No.1 -base slot 40 of the radio access point terminal 101 is synchronized with a slot position of No.255-base slot 40 of the first radio relay terminal 211.

Specifically, as shown in Fig. 5, the first radio relay terminal 211 re-configures its time slot so that the beacon transmission slot 411 (BT) which is a head position of the lower slot 41 of No. 1-base slot 40 corresponds to a beacon reception slot 421 (BR) which is a head position of the upper slot 42 of No. 255-base slot 40. That is, the first radio relay terminal 211 synchronizes its clock such that the slot position of the beacon reception slot 421 of No. 255-base slot 40 conforms to the slot position of the beacon transmission slot 411 of No. 1-base slot 40 of the radio access point terminal 101.

In the example of Fig. 4, the time slots in which the beacon signals Bi - Biii are received are represented by black color. In the example of Fig. 4, the upper slots 42 of No. 255-base slots 40 of the lower device, are represented by black color. In the example of Fig. 5, the beacon reception slots 421 in which the lower device performs synchronization are hatched.

The first radio relay terminal 211 constructs the first layer together with the radio access point terminal 101, and the like, and constructs the second layer together with the second radio relay terminal 221, and the like (see Fig. 2). Therefore, the second radio relay terminal 221 is the lower device present immediately below the first radio relay terminal 211. The beacon signal Bii in the second layer is transmitted from the first radio relay terminal 211 to the lower device in the base slot 40 of odd-numbered slot number. Among the beacon signals Bii of the first radio relay terminal 211 which is the upper device, the second radio relay terminal 221 receives the first beacon signal Bii(1) and re-configures its time slot so that a slot position of No. 1-base slot 40 of the first radio relay terminal 211 corresponds with a slot position of No. 255-base slot 40 of the second radio relay terminal 221.

The second radio relay terminal 221 constructs the third layer (see Fig. 2) together with the radio adapter terminal 331, etc.. The beacon signal Biii in the third layer is transmitted from the second radio relay terminal 221 to the radio adapter terminal 331, in the base slot 40 of odd-numbered slot number, in cycles of T5. Like first radio relay terminal 211 and the second radio relay terminal 221, the radio adapter terminal 331 which is the lowermost device receives the first beacon signal Biii(1), and re-configures its time slot so that a slot position of No.1-base slot 40 of the second radio relay terminal 221 corresponds with a slot position of No. 255-base slot 40 of the radio adapter terminal 331.

The example shown in Figs. 4 and 5 will be described in conjunction with the transmission timing of the first beacon signal. The first radio relay terminal 211 receives the first beacon signal Bi(1) transmitted from the radio access point terminal 101 in No. 255-base slot 40 of the first radio relay terminal 211. The first radio relay terminal 211 transmits the first beacon signal Bii(1) in No.1-base slot 40 of the first radio relay terminal 211. At this time, the second beacon signal Bi(2) transmitted from No. 3-base slot 40 of the radio access point terminal 101 is transmitted at a timing of the upper slot 42 of No. 1-base slot 40 of the first radio relay terminal 211.

In other words, the first radio relay terminal 211 transmits the beacon signal Bii (1) in the beacon transmission slot 411 of the lower slot 41 of No. 1-base slot 40 of the first radio relay terminal 211, which is immediately before the radio access point terminal 101 transmits the second beacon signal Bi(2). Likewise, the second radio relay terminal 221 transmits the beacon signal Biii (1) in the beacon transmission slot 411 of the lower slot 41 of No. 1-base slot 40 of the second radio relay terminal 221, which is immediately before the first radio relay terminal 211 transmits the second beacon signal Bii(2).

Thus, the radio relay terminal 201 as the lower device (first radio relay terminal 211 and second radio relay terminal 221) is configured to transmit the first beacon signal in the slot position immediately before the upper device (the radio access point terminal 101 from the perspective of the first radio relay terminal 211 and the first radio relay terminal, 211 from the perspective of the second radio relay terminal 221) transmits the second beacon signal.

In the above configuration, the lower devices do not receive all of the beacon signals and provide synchronization of all of the clocks. Instead, the lower devices regularly receive the beacon signals transmitted from the upper devices (T4 seconds in the example of Fig. 4, once in every 256 base slots 40) and provide synchronization of the clocks.

In communication in the direction from the upper device to the lower device (lower-direction communication), the radio relay terminals await intermittent reception in the link connection slots 422 of all of the upper slots 42 (reception carrier sense operation) and await the radio signals from the upper devices. The upper devices can transmit the radio signals for link connection in the link connection slots 412 of all of the lower slots 41.

In communication in the direction from the lower device to the upper device (upper-direction communication), when a need for communication arises, in the lower device, the beacon signal transmitted from the upper device in a most recent time is received in the beacon reception slot 421 of the upper slot 42, a timing of the following link connection slot 422 is synchronized with a timing of the link connection slot 412 of the lower slot 41 of the upper device, and the radio signal for link connection is transmitted in the link connection slot 422. The upper device awaits the intermittent reception in the link connection slot 412 just after the upper device has transmitted the beacon signal.

When a time period that elapses from a time point ("initial upper beacon transmission time point" for the sake of convenience) from when the upper device (radio access point terminal 101 or radio relay terminal 201) has transmitted the beacon signal until a time point ("lower beacon transmission time point" for the sake of convenience) when the radio relay terminal 201 in the lower layer transmits a first beacon signal after the initial upper beacon transmission time point is a first beacon transmission interval, and a time period that elapses from the lower beacon transmission time point if the radio relay terminal 201 until a time point ("subsequent upper beacon transmission time point" for the sake of convenience") when the upper device (radio access point terminal 101 or the radio relay terminal 201 in the upper layer) of the radio relay terminal 201 transmits a first beacon signal after the lower beacon transmission time point is a second beacon transmission interval, the second transmission time interval is set longer than the first beacon transmission interval.

For example, as shown in Fig. 5, regarding the first radio relay terminal 211, a time period that elapses from a time point (initial upper beacon transmission time point) when the radio access point terminal 101 as the upper device transmits the beacon signal Bi(1) until a time point (lower beacon transmission time point) when the first radio relay terminal 211 transmits the beacon signal Bii(1), corresponds to a first beacon transmission interval Ta (211). Also, a time period that elapses from when the time point (lower beacon transmission time point) when the first radio relay terminal 211 transmits the beacon signal Bii(1) until a time point (subsequent upper beacon transmission time point) when the radio access point terminal 101 transmits the beacon signal Bi(2), corresponds to a second beacon transmission interval Tb (211). As can be seen from Fig. 5, Ta(211)>Tb(211).

Likewise, as shown in Fig. 5, regarding the second radio relay terminal 221, a time period that elapses from when a time point (initial upper beacon transmission time point) when the first radio relay terminal 211 as the upper device transmits the beacon signal Bii(1) until a time point (lower beacon transmission time point) when the second radio relay terminal 221 transmits the beacon signal Biii(1), corresponds to a first beacon transmission interval Ta (221). Also, a time period that elapses from when the time point (lower beacon transmission time point) when the second radio relay terminal 221 transmits the beacon signal Biii(1) until a time point (subsequent upper transmission time point) when the first radio relay terminal 211 transmits the beacon signal Bii(2), corresponds to a second beacon transmission interval Tb (221). As can be seen from Fig. 5, Ta (221) > Tb (221).

Since the first beacon transmission interval Ta is set longer than the second beacon transmission interval Tb as described above, the lower radio relay terminal 201 (the first radio relay terminal 211 from the perspective of the radio access point terminal 101, the second radio relay terminal 221 from the perspective of the first radio relay terminal 211) is placed in a state in which it is able to communicate with the lower device (the second radio relay terminal 221 from the perspective of the first radio relay terminal 211, the radio adapter terminal 331 from the perspective of the second radio relay terminal 221), just after the lower radio relay terminal 201 transmits the beacon signal to the lower device, and is placed in a state in which it is able to communicate with the upper device (radio access point terminal 101 or the first radio relay terminal 211) just after the lower radio relay terminal 201 receives the beacon signal from the upper device.

Because of the above, the second radio relay terminal 221 can relay-transmit the terminal calling data according to the timing when the radio adapter terminal 331 transmits the terminal calling data. Therefore, an activation time of the radio adapter terminal 331 can be reduced. In addition, since the second radio relay terminal 221 or the first radio relay terminal 211 can receive the beacon signal transmitted from the upper device, as soon as it receives the terminal calling data, it is able to transmit the terminal calling data to the upper device promptly while avoiding a delay.

**[Data communication from radio access point terminal to radio adapter terminal]**

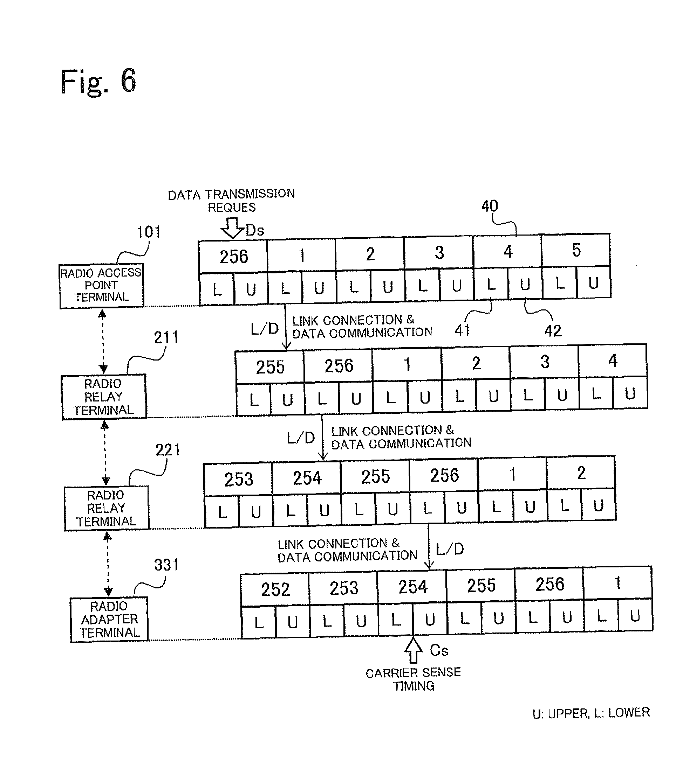

Next, a description will be given of a communication operation in a case where the radio access point terminal 101 in the uppermost layer to the radio adapter terminal 331 in the lowermost layer in the example of Figs. 4 and 5, with reference to Figs. 3A, 3B and 6. As an example of data transmission from the radio communication device in the uppermost layer to the radio communication device in the lowermost later is a case where the radio access point terminal 101 in the uppermost layer performs center polling to the radio adapter terminal 331 in the lowermost layer.

**(I. Data communication operation)**

The relay devices, which are the first radio relay terminal 211 and the second radio relay terminal 221, perform the reception carrier sense operation every time in the link connection slots 422 in the upper slots 42 of all of the base slots 40 to detect the radio signal transmitted from the upper device. The reception carrier sense operation is referred to as an operation in which the relay device detects whether or not a level of reception from the upper device is equal to or greater than a predetermined level, and if it is determined that the level of reception from the upper device is less than the predetermined level, the relay device calls off the reception carrier sense operation and shifts to a standby state, while if it is determined that the level of reception from the upper device is equal to or greater than the predetermined level, the relay device receives a link connection request signal from the upper device.

More specifically, as shown in Fig. 3A and 5, the upper slot 42 of the base slot 40 includes a link connection slot 422. As shown in Fig. 3B, the link connection slot 422 contains the upper response/upper calling slot 402b. Therefore, the first radio relay terminal 211 and the second radio relay terminal 221 perform the reception carrier sense operation in the upper response/upper calling slot 402b. Therefore, as shown in Fig. 6, when a data transmission request directed to the radio adapter terminal 331 (block arrow Ds in Fig. 6) is generated in, for example, No. 256-base slot 40, as shown block arrow L in Fig.5 and arrow L/D in Fig.6, the radio access point terminal 101 transmits the link connection request signal in the upper response/upper calling slot 402b in the lower slot 41 of No. 1-base slot 40.

The first radio relay terminal 211 performs the reception carrier sense operation in the upper response/upper calling slot 402b in the upper slot 42 of No. 255-base slot 40. The first radio relay terminal 211 performs the reception carrier sense of the link connection request signal from the radio access point terminal, 101, and then receives it. Thus, the radio link is connected between the radio access point terminal 101 as the upper device and the first radio relay terminal 211 as the lower device (link connection operation). Data communication is performed between the lower slot 41 of No. 1-base slot 40 in radio access point terminal 101 and the upper slot 42 of No. 255-base slot 40 in the first radio relay terminal 211, and data is transmitted from the radio access point terminal 101 to the first radio relay terminal 211 (arrow L/D in Fig. 5).

Then, like the operation of radio access point terminal 101, the first radio relay terminal 211 performs link connection operation and data communication operation with the second radio relay terminal 221 as the lower device, and transmits the data to the second radio relay terminal 221. That is, the first radio relay terminal 211 receives data from the radio access point terminal 101 in the upper slot 42 of No. 255-base slot 40, and therefore performs the reception carrier sense operation in the lower slot 41 of No. 256-base slot 40 like the radio access point terminal 101.

Specifically, as shown in Fig. 5, the lower slot 41 of No. 256-base slot 40 in the first radio relay terminal 211 corresponds to the upper slot 42 of No. 254-base slot 40 in the second radio relay terminal 221, so that the reception carrier sense operation takes place between these time slots. When the second radio relay terminal 221 receives the link connection request signal from the first radio relay terminal 211, the radio link connection has been established, and the following data communication takes place (arrow L/D in Fig. 6).

The second radio relay terminal 221 performs the link connection operation and the data communication operation with the radio adapter terminal 331 as the lower device by the operation similar to that of the radio access point terminal 101 and transmits data to the radio adapter terminal 331.

The radio adapter terminal 331 as a lowermost radio terminal which is not the relay terminal performs the reception carrier sense operation in a skipped manner, to reduce electric power consumption, differently from the first radio relay terminal 211 and the second radio relay terminal 221. For example, the radio adapter terminal 331 performs the reception carrier sense operation once in every 2 slots, as shown in time slot represented by black color in Fig. 5 (the link connection slot 422 shown by "L" in Fig.5). If the radio adapter terminal 331 is not performing the reception carrier sense operation in the base slots 40, the radio adapter terminal 331 does not receive the link connection request signal even when the second radio relay terminal 221 transmits the link connection request signal according to the base slot 40. Therefore, the radio link connection is not established between the second radio relay terminal 221 and the radio adapter terminal 331.

As will be described later, the radio signal transmitted from the radio access point terminal 101 contains route information from the radio access point terminal 101 to the radio adapter terminal 331. This route information contains information of a slot number in which the radio adapter terminal 331 performs the reception carrier sense operation. Therefore, the timing information analyzing section 26 of the second radio relay terminal 221 analyzes the route information, and recognizes that slots numbers in which the radio adapter terminal 331 performs the reception carrier sense operation are, for example, 1,5, 9 ....

As shown in Figs. 5 and 6, the second radio relay terminal 221 can know that a most recent carrier sense timing of the radio adapter terminal 331 is No. 5-base slot 40 (block arrow Cs) from the perspective of No. 254-base slot 40. Therefore, the second radio relay terminal 221 transmits the link connection request signal in the lower slot 41 of No. 254-base slot 40. The radio adapter terminal 331 awaits the reception carrier sense operation in No. 5-base slot 40. Therefore, the radio adapter terminal 331 receives the link connection request signal and connects the radio link to receive the data from the second radio relay terminal 221.

**(II. Link connection operation)**

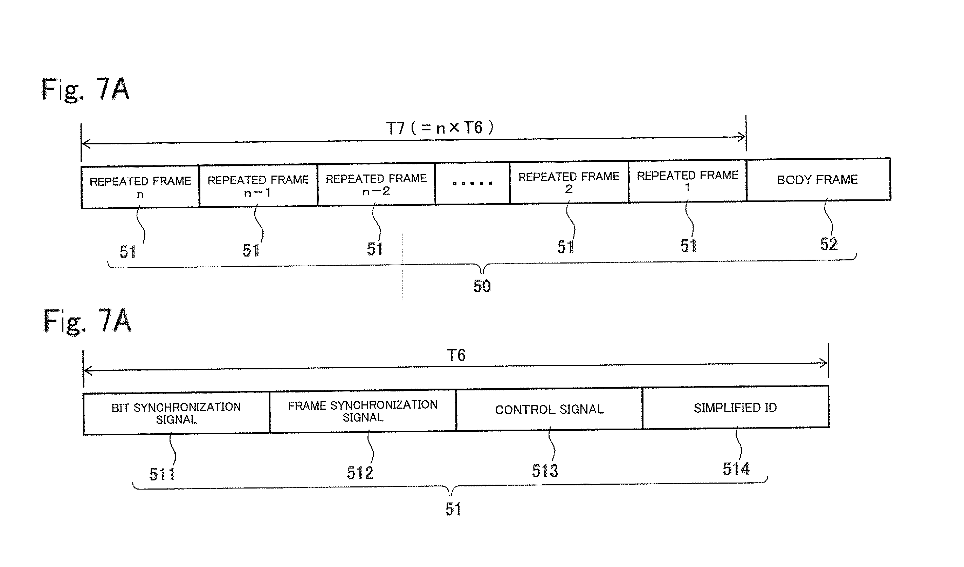

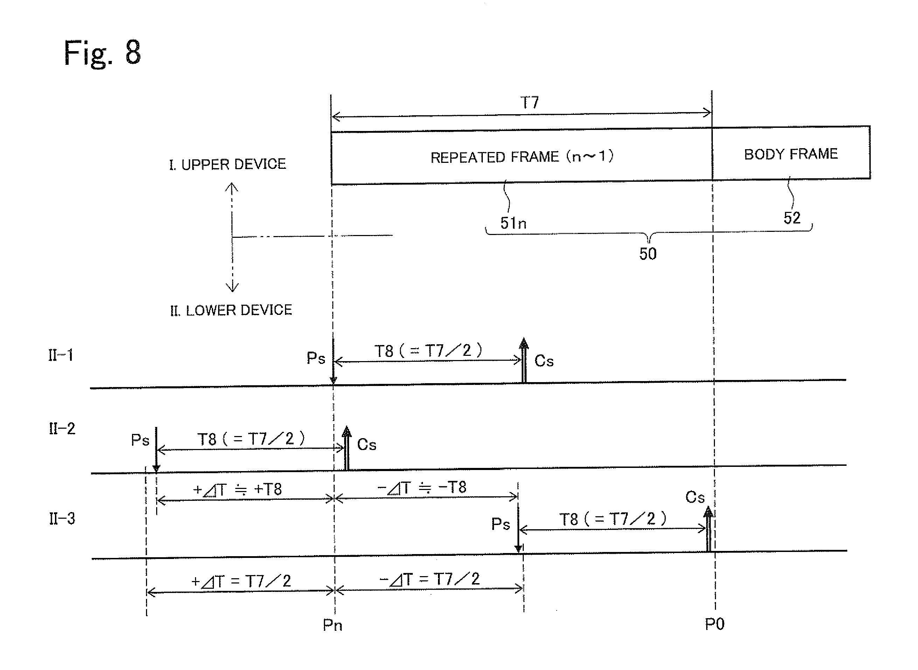

Now, the link connection operation performed between the upper device and the lower device in data transmission from the radio access point terminal 101 to the radio adapter terminal 331, will be described specifically with reference to Figs. 7A, 7B, and 8.

As shown in Fig. 7A, a telegram format of the link connection request signal is composed of **n** repeated frames 51 and the following body frame 52. The **n** repeated frames 51 are assigned with frame numbers 1 - n, respectively. As shown in Fig. 6B, one repeated frame 51 is composed of a bit synchronization signal 511, a frame synchronization signal 512, a control signal 513 and a simplified ID 514. A frame length of the repeated frame 51 is T6. Therefore, a frame length (reception time) of the **n** repeated frames 51 is $T7 = n \times T6$.

The bit synchronization signal 511 constituting the repeated frame 51 is a signal used to decide a sampling position of a bit. The frame synchronization signal 512 is a signal used to detect a head of data contained in the repeated frame 51. The control signal 513 is a signal describing control information. The simplified ID 514 is a shortened form of an identification code (ID) used to identify a transmission source device. If a bit size of an original ID which is not shortened is 64 bits, the simplified ID 514 is information of 16 bits obtained by dividing the original ID in four. The simplified ID 514 is a shortened form of an identification code (ID) used to identify a transmission source device.

The control information described in the control signal 513 contains information relating to the simplified ID 514, the frame number of the repeated frame 51, etc.. For example, the information relating to the simplified ID 514 indicates which of four divided portions of ID the simplified ID 514 is. The frame numbers assigned to the n repeated frames 51 are described in the control signal 513 as control information. As shown in Fig. 7A, the repeated frames 51 are transmitted in decreasing order of the frame number (maximum frame number is **n**). The frame numbers assigned to the repeated frames 51 decrease one by one from the head of the link connection request signal 50, and the frame number of the repeated frame 51 just before the body frame 52 is 1.

To receive the link connection request signal 50, the reception carrier sense operation is performed as described above. In the reception carrier sense operation, consideration must be given to the fact that an internal clock (clock section) of the upper device and an internal clock of the lower device are asynchronous. Specifically, as indicated by an upper side I in Fig. 8, the upper device transmits the link connection request signal 50. Correspondingly, as indicated by a lower side II in Fig. 8, the lower device performs the reception carrier sense operation of the link connection request signal 50.

In description with reference to Fig. 8, a head position Ps of the upper response/upper calling slot 402b of the lower device is simply referred to as "calling slot head position Ps", and a timing Cs at which the lower device performs the reception carrier sense operation is simply referred to as "carrier sense timing Cs". The carrier sense timing conforms to the intermittent reception timing as will be described later. The **n** repeated frames 51 are referred as "repeated frame group 51n", a head position Pn of the repeated frame group 51n is simply referred to as "frame group head position Pn", and a terminal position P0 of the repeated frame group 51 n is simply referred to as "frame group terminal position P0",

In II-1 of the lower side II of Fig. 8, a case is shown where the clock of the upper device and the clock of the lower device are not asynchronous (these clocks do not conform to each other). The calling slot head position Ps of the lower device conforms to a head position of the link connection request signal 50 from the upper device, i.e., frame group head position Pn. The carrier sense timing Cs of the lower device is set to a time after time T8 from the calling slot head position Ps. If the carrier sense timing Cs corresponds to any one of **n** repeated frames 51 in the repeated frame group 51n, then the lower device succeeds in the reception carrier sense operation and can receive the body frame 52. This time T8 is referred to as "timing set time" for easier explanation.

In II-2 of the lower side II of Fig. 8, a case is shown where the clock of the lower device is ahead of the clock of the upper device by + $\Delta$T. In this example, the clock of the lower device is ahead of the clock of the upper device by a time ($\Delta$T$\fallingdotseq$ T8) which is a little shorter than the timing set time T8, the calling slot head position Ps of the lower device is + $\Delta$T ahead of the frame group head position Pn. Therefore, the carrier sense timing Cs set to a time after the timing set time T8 from the calling slot head position Ps is just after the frame group head position Pn.

In II-3 of the lower side II of Fig. 8, a case is shown where the clock of the lower device is retarded with respect to the clock of the upper device by - $\Delta$T. In this example, the clock of the lower device is retarded with respect to the clock to the upper device by a time ($\Delta$T$\fallingdotseq$ T8) which is a little shorter than the timing set time T8, the calling slot head position Ps of the lower device is retarded with respect to the frame group head position Pn by - $\Delta$T. Therefore, the carrier sense timing Cs set to a time after the timing set time T8 from the calling slot head position Ps is just before the frame group head position Pn.

The carrier sense timing Cs (timing at which the reception carrier sense operation is performed) must be the timing corresponding to any one of **n** repeated frames 51. Therefore, as shown in Fig. 8, the carrier sense timing Cs must be set in a period from the frame group head position Pn to the frame group terminal position P0. The timing set time T8 set on the basis of the calling slot head position Ps is set to a half of a frame length T7 of the repeated frame group 51n. Thus, if a clock difference $\Delta$T between the upper device and the lower device is within a range of -T8$\leqq$$\Delta$T$\leqq$ +T8, the carrier sense timing Cs falls into the period from the frame group head position Pn to the frame group terminal position P0. Therefore, the lower device can perform the reception carrier sense operation in any one of **n** repeated frames 51 and is able to receive the body frame 52.

More specifically, when a maximum relative error between the clock of the upper device and the clock of the lower device is $\pm$ 100ppm and the lower device synchronizes the clock (receives the beacon signal) in cycles of T4 = 512 seconds, the generated clock difference $\Delta$T is 51.2 milliseconds at maximum. If the number n of the repeated frames 51 (the number of times the repeated frame 51 is transmitted) is set so that T8 $\geqq$ 51.2 milliseconds, failure to receive the link connection request signal is avoided.

In the present embodiment, to suppress or avoid an increase in electric power consumption, the upper device performs control for changing the number of times n of transmission of the repeated frame 51, according to a time from reception (clock synchronization) of the beacon signal to the carrier sense timing.

Specifically, in the example of Fig. 4, it is assumed that a data transmission request directed to the radio adapter terminal 331 occurs in No. 5-base slot 40 in the radio access point terminal 101. At this time, the radio access point terminal 101 transmits the link connection request signal 50 in the upper response/upper calling slot 402b in the lower slot 41 of No. 6-base slot 40. In response to this, the first radio relay terminal 211 performs the reception carrier sense operation in the upper response/upper calling slot 402b in the upper slot 42 of No. 4-base slot 40, and then receives the link connection request signal 50 from the radio access point terminal 101.

The first radio relay terminal 211 as the lower device performs synchronization of the clock at a reception timing of the beacon signal Bi (1) in the first layer transmitted from the radio access point terminal 101. Because of this, in No. 4-base slot 40 of the first radio relay terminal 211, there is no substantial clock difference with the radio access point terminal 101 ($\Delta T \fallingdotseq 0$). Therefore, if the number of times $n$ of transmission of the repeated frame 51 of the link connection request signal 50 is changed according to a maximum clock difference $\Delta Tmax$ (in the above example, $\Delta Tmax = 51.2$ milliseconds), waste may occur in communication control and electric power consumption may increase.

Accordingly, the radio access point terminal 101 measures a time from a time point when it transmits the beacon signal Bi(1) and the first radio relay terminal 211 performs synchronization of the clock until the timing at which the first radio relay terminal 211 performs the reception carrier sense operation, and performs control for changing the number of times $n$ of transmission of the repeated frame 51 in the link connection request signal 50, according to a length of this measurement time. The time from the time point when the first radio relay terminal 211 performs synchronization of the clock until the timing at which the first radio relay terminal 211 performs the reception carrier sense operation, is referred to as "clock difference evaluation time" for easier explanation.

The clock difference evaluation time corresponds to a time that passes from when the base slot 40 in which the beacon signal Bi (1) has been received to the base slot 40 in which the reception carrier sense operation has been performed, and its length correlates with the slot number. That is, as the clock difference evaluation time is shorter and therefore a substantial time does not pass after the clock synchronization, the clock difference $\Delta T$ is smaller. On the other hand, as the clock difference evaluation time is longer, the clock difference $\Delta T$ is greater. Accordingly, the radio access point terminal 101 may perform control for increasing the number of times $n$ of transmission of the repeated frame 51 when the slot number is greater.

The base slot 40 in which the beacon signal Bi (1) is transmitted is the slot number 1. When the radio access point terminal 101 transmits the link connection request signal 50 in the base slot 40 of a slot number X (No. X-base slot 40), a numeric value obtained by dividing the slot number X by a total number of base slots 40 can be utilized as control for changing the number of times $n$ of transmission of the repeated frame 51.

Specifically, the total number of the base slots 40 in one cycle is 256. The numeric value obtained by dividing the slot number X by the total number of base slots 40 is X/256. A frame length of one repeated frame 51 is pre-set to T6. The number of times $n$ of transmission defines the frame length T7 of the repeated frame group 51n. The maximum clock difference $\Delta Tmax$ is 51.2 milliseconds in the above stated example. The control section 13 of the radio access point terminal 101 sets the number of times $n$ of transmission of the repeated frame 51 so that $T7 \geqq (X/256) \times (\pm 51.2$ seconds).

In a case where the radio access point terminal 101 transmits the link connection request signal in, for example, No. 4-base slot 40, the number of times $n$ of transmission may be changed so that $T7 \geqq \pm 0.8$ millisecond. In the case where the frame length T6 of one repeated frame 51 is longer than 0.8 millisecond, the number of times $n$ of transmission may be one or more.

The timing (the carrier sense timing Cs) of the reception carrier sense operation performed within one base slot 40 is set as a timing after the timing set time T8 has passed from start (calling slot head position Ps) of the upper response/upper calling slot 402b within the link connection slot 412 of the base slot 40. The timing set time T8 is set to a half of the frame length T7 ($T8 = T7/2$). Because of this, when the number of times $n$ of transmission of the repeated frame 51, i.e., the frame length T7 of the repeated frame group 51n changes, and the timing set time T8 is fixed, the clock difference $\Delta T$ between the radio access point terminal 101 and the first radio relay terminal 211 can be substantially cancelled ($\Delta T = 0$), but the carrier sense timing Cs is not present in a time which is the half of the frame length T7 (see Fig. 8). This means that a difference is generated in an allowable range between a case where the clock difference $\Delta T$ is positive and a case where the clock difference $\Delta T$ is negative.

In the case of the clock difference $\Delta T = 0$, the first radio relay terminal 211 may perform control to change the timing set time T8 according to a change in the frame length T7 so that the carrier sense timing Cs becomes a middle time of the frame length T7 (T7/2). As described above, the frame length T7 correlates with the slot number in the radio access point terminal 101. The first radio relay terminal 211 converts the slot number (e.g., slot number W) of the base slot 40 in which the reception carrier sense operation has been performed into a slot number (e.g., slot number X) in the radio access point terminal 101 ($W = X$). By calculating a change in the frame length T7 from the converted slot number (e.g., $T7 \geqq (X/256) \times (\pm 52.2$ milliseconds), the timing set time T8 can be changed according to the frame length T7.

Although in the above description, the timing set time T8 is changed based on the slot number, the present invention is not limited to this. For example, the timing set time T8 is set as a fixed value in the lower device. Alternatively, a position at which transmission of the link connection request signal 50 in the upper device starts (time corresponding to the frame group head position Pn in Fig. 8) can be changed.

The link connection request signal 50 is transmitted from the upper device in the upper response/upper calling slot 402b in the lower slot 41 of the base slot 40. The upper device performs control for changing the timing at which transmission of the link connection request signal 50 starts, according to the slot number of the base slot 40. As the slot number increases, the frame length T7 increases. Therefore, by advancing (putting ahead) the timing at which transmission of the link connection request signal 50 starts, the middle time of the frame length T7 is allowed to correspond to the position of the carrier sense timing Cs.

Thus, in the present embodiment, the radio communication is performed between the upper device and the lower device cyclically by repeating one cycle divided into the plurality of base slots 40. Each base slot 40 is partitioned into the lower slot 41 used to perform the radio communication with the lower device, and the upper slot 42 used to perform the radio communication with the upper device. In the lower-direction communication (radio communication from the upper device to the lower device), the radio adapter terminal 331 is configured to perform link connection once in every plural upper slots 42.

For example, regarding the second radio relay terminal 221, in the radio communication between itself (reference terminal) and the radio adapter terminal 331, the cycle of the lower slot 41 of itself is set such that the lower slot 41 corresponds to the upper slot 42 in which most recent link connection with the radio adapter terminal 331 is performed. In a case where a plurality of radio relay terminals 201 are connected together so that relay-transmission is performed in plural layers which are two or more layers, the radio relay terminal 201 (e.g., the first radio relay terminal 211) other than the radio relay terminals 201 (the second radio relay terminal 221 in the present embodiment) which is the upper terminal of the radio adapter terminal 331 is configured to perform the link connection between the lower slot 41 of itself and the upper slot 42 of the lower device, just after the link connection is performed between the lower slot 41 of the upper device (e.g., radio access point terminal 101) and the lower slot 41 of itself.

Thus, even when the radio adapter terminal 301 is configured to intermittently perform the reception carrier sense operation, the radio relay terminals 201 in plural layers are able to relay-transmit the radio signal from the upper device to the radio adapter terminal 301 promptly. That is, to the radio relay terminals 201 (e.g., second radio relay terminal 221) as the upper terminal of the radio adapter terminal 301, the radio signal from the radio access point terminal 101 is relay-transmitted promptly. Therefore, the radio relay terminal 201 as the upper terminal may transmit the radio signal according to the timing of most recent reception carrier sense operation in the radio adapter terminal 301. As a result, an activation time of the radio adapter terminal 301 can be reduced, and hence an increase in electric power consumption in the radio adapter terminal 301 can be suppressed with a simple configuration.

**[Data communication from radio adapter terminal to radio access point terminal]**

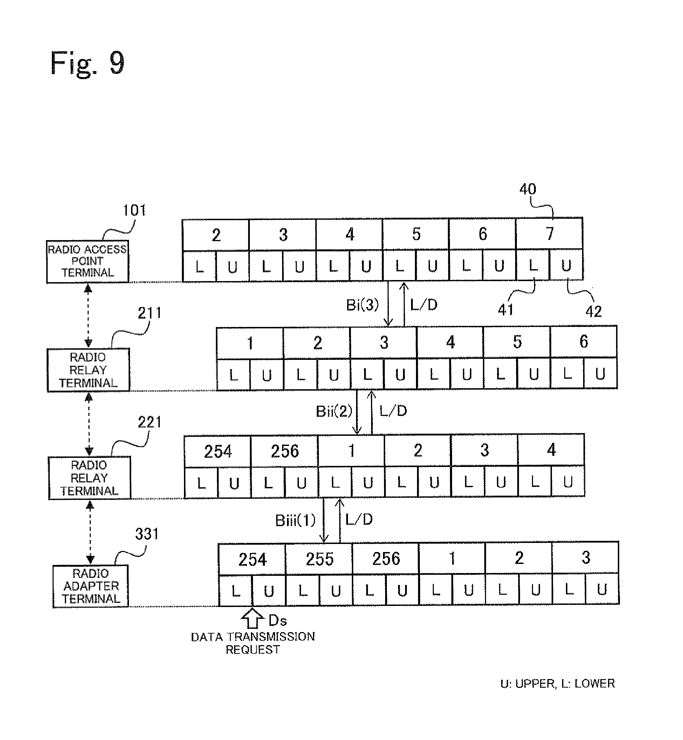

Next, a communication operation in a case where the radio adapter terminal 331 as the lowermost terminal transmits data to the radio access point terminal 101 as the uppermost terminal in the example of Fig. 4 and 5, will be described specifically, with reference to Fig. 3A, 3B and 9. As an example of the data transmission from the lower most radio communication device to the uppermost radio communication device, there is "terminal calling" in which the lowermost radio adapter terminal 331 transmits the terminal calling data requested, in response to the center polling transmitted from the uppermost radio access point terminal 101.

When a data transmission request from the lower device to the upper device occurs, as described above, the lower device receives the beacon signal transmitted from the upper device in the beacon reception slot 421 (see Fig. 3A) and performs synchronization of the clock. When the lower device transmits data to the upper device, the link connection operation is performed like the data transmission from the radio access point terminal 101 to the radio adapter terminal 331. At this time, the link connection request signal (see Fig. 7A) is transmitted in a lower calling slot 402a in a link connection slot 412 immediately after a beacon reception slot 421 in which the beacon signal has been received.

In the examples of Fig. 4 and 5, as described above, the radio adapter terminal 331 receives the beacon signal Biii in the third layer from the second radio relay terminal 221 and performs synchronization of the clock. The beacon signal Biii is transmitted once in every two slots as described above. When the slot length of the base slot 40 is T1 = 2 seconds, the beacon signal Biii is transmitted once in every 4 seconds. Therefore, the radio adapter terminal 331 can receive the beacon signal Biii from the second radio relay terminal 221 within 4 seconds after the data transmission request is generated.

For example, as shown in Figs. 5 and 9, a data transmission request (block arrow Ds) is generated in No. 254-base slot 40 of the radio adapter terminal 331, the radio adapter terminal 331 receives the beacon signal Biii (1) transmitted in No. 1-base slot 40 of the second radio relay terminal 221, in No. 255-base slot 40 and performs synchronization of the clock. Thereby, a slot position of a link connection slot 422 ("L" in Fig.5) in the upper slot 42 of No. 255-base slot 40 of the radio adapter terminal 331 is synchronized with a slot position of a link connection slot 412 ("L" in Fig.5) in the lower slot 41 of No. 1-base slot 40 of the second radio relay terminal 221.

By position synchronization (clock synchronization) between the link connection slots 412 and 422, the link connection request signal transmitted from the radio adapter terminal 331 is received in the lower slot 41 of No. 1-base slot 40 of the second radio relay terminal 221 like the reception carrier sense operation (see Figs. 6 and 8), and the link connection operation is performed. A telegram format of the link connection request has the same configuration as that shown in Fig. 7A, but there is not a substantial clock difference ΔT. Therefore, the number of times n of transmission of the repeated frame 51 (number of repeating) may be less.

By the link connection operation as described above, the radio adapter terminal 331 transmits the radio signal directed to the radio access point terminal 101 in a data communication slot 423 in the upper slot 42 of No. 255-base slot 40 (arrow L/D in Fig. 9). The second radio relay terminal 221 receives the radio signal directed to the radio access point terminal 10 in a data communication slot 413 in the lower slot 41 of No. 1-base slot 40 corresponding to No. 255-base slot 40 of the radio adapter terminal 331 (arrow L/D in Fig. 9).

Then, the second radio relay terminal 221 receives the beacon signal Bii in the second layer transmitted from the first radio relay terminal 211, and performs synchronization of the clock with first radio relay terminal 211. The second radio relay terminal 221 performs data communication with the radio adapter terminal 331 in the lower slot 41 of No. 1-base slot 40 and therefore can receive the beacon signal Bii in the upper slot 42 following the lower slot 41. The base slot 40 of first radio relay terminal 211 corresponding to No. 1-base slot 40 is No. 3 -base slot 40. Therefore, the second radio relay terminal 221 receives the beacon signal Bii(2) transmitted from this No. 3-base slot 40.

Receiving the beacon signal Bii(2), a slot position of a link connection slot 422 in an upper slot 42 of No. 1-base slot 40 of the second radio relay terminal 221 is synchronized with a slot position of a link connection slot 412 in a lower slot 41 of No. 3-base slot 40 of the first radio relay terminal 211. Therefore, the link connection request signal transmitted from the second radio relay terminal 221 is received in the lower slot 41 of No. 3-base slot 40 of the first radio relay terminal 211. Thereby, the link connection operation is performed, and the data communication (transmission/ reception directed to the radio access point terminal 101) is performed between the second radio relay terminal 221 and the first radio relay terminal 211 (arrow L/D in Fig. 9).

In the same manner, the first radio relay terminal 211 receives the beacon signal Bi in the first layer transmitted from the radio access point terminal 101, and performs synchronization of the clock with the radio access point terminal 101. The first radio relay terminal 211 performs data communication with the second radio relay terminal 221 in the lower slot 41 of No. 3-base slot 40 and therefore can receive the beacon signal Bi in the upper slot 42 following the lower slot 41. The base slot 40 of the radio access point terminal 101 corresponding to No. 3-base slot 40 is No. 5-base slot 40. Therefore, the first radio relay terminal 211 receives the beacon signal Bi(3) transmitted from this No. 5-base slot 40.

Receiving the beacon signal Bi(3), a slot position of a link connection slot 422 in an upper slot 42 of No. 3-base slot 40 of the first radio relay terminal 211 is synchronized with a slot position of a link connection slot 412 in a lower slot 41 of No. 5-base slot 40 of the radio access point terminal 101. Therefore, the link connection request signal transmitted from the first radio relay terminal 211 is received in the lower slot 41 of No. 5-base slot 40 of the radio access point terminal 101. Thereby, the link connection operation is performed, and the data communication (transmission/ reception of the radio signal directed to the radio access point terminal 101) is performed between the first radio relay terminal 211 and the radio access point terminal 101 (arrow L/D in Fig. 9).

As described above, in the case where the lower device transmits the data to the upper device (communication in the upper direction is performed), in the examples shown in Figs. 4, 5, and 9, the upper device transmits the beacon signal in the base slot 40 just after the lower device transmitted the beacon signal. Therefore, the link connection operation and the data communication operation can be performed in the base slot 40 just after the lower device transmitted the beacon signal. Therefore, in the case where the radio adapter terminal 331 as the lowermost terminal relay-transmits the radio signal to the radio access point terminal 101 via the plurality of radio relay terminals 201 (the first radio relay terminal 211 and the second radio relay terminal 221), generation of a significant delay can be suppressed, and efficient communication is enabled.

In the present embodiment, in the upper-direction communication (radio communication from the lower device to the upper device), for example, regarding the second radio relay terminal 221, in the radio communication between itself (reference terminal) and, the first radio relay terminal 211 and the radio adapter terminal 331, the cycles of the radio communication are set such that the lower slot 41 of itself corresponds to the upper slot 42 of the radio adapter terminal 331 and the upper slot 42 of itself corresponds to the lower slot 41 of the first radio relay terminal 211. More specifically, the cycles of the radio communication are set such that the link connection slot 412 of the lower slot 41 of itself corresponds to the link connection slot 422 of the upper slot 42 of the radio adapter terminal 331, and the upper slot 42 of itself corresponds to the lower slot 41 in which the reception carrier sense operation (link connection) of the first radio relay terminal 211 as the upper terminal is performed.

Since the positions of the time slots are synchronized with each other as described above, the second radio relay terminal 221 can relay-transmit the terminal calling data according to the timing when the radio adapter terminal 331 transmits the terminal calling data. The second radio relay terminal 221 or the first radio relay terminal 211 can receive the beacon signal transmitted from the upper device as soon as it receives the terminal calling data, and transmit the terminal calling data promptly to the upper device. As a result, it becomes possible to suppress or avoid a significant delay when the terminal calling data is relay-transmitted from the radio adapter terminal 301 to the radio access point terminal 101 while suppressing an increase in the electric power consumption in the radio adapter terminal 301, with a simple configuration.

**[Radio adapter terminal join in radio communication system]**

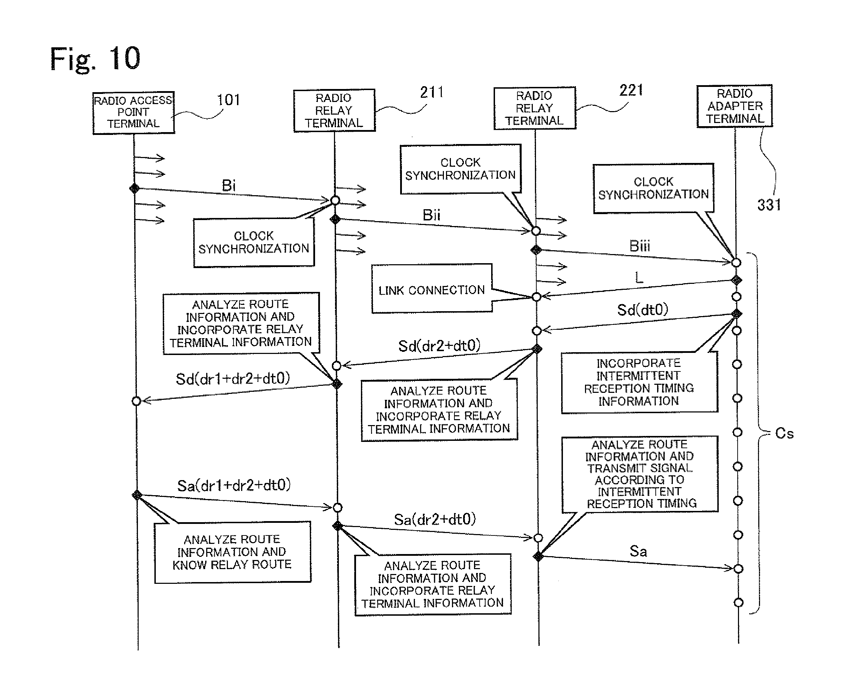

Next, a description will be given of an operation which occurs when the radio adapter terminal 301 newly joins the radio communication system having the above configuration will be described with reference to Fig. 10. In Fig. 10, a direction from upper to lower indicates a passage of time, transmission of the radio signals is represented by black rhombic symbols, and reception of the radio signals is represented by while circular symbols.

(I. **Radio adapter terminal newly join system)**

For example, as shown in Fig. 10, it is assumed that the radio communication system includes the radio access point terminal 101, the first radio relay terminal 211 and the second radio relay terminal 221 (see Figs. 2 and 4), and for example, the radio adapter terminal 331 newly joins the system having the above configuration. When a power supply of the radio adapter terminal 331 is turned ON, the radio adapter terminal 331 perform a reception operation for a predetermined time, to make an attempt to receive a beacon signal. If the radio adapter terminal 331 receives a plurality of beacon signals within the predetermined time, it determines which of the beacon signals the clock should be synchronized with, according to predetermined conditions. As determination conditions in this case, there are a receiving level of the received beacon signal, and information of the number of relays of the radio relay terminals 201 which are transmission sources of the received beacon signal.

In the example shown in Fig. 10, the radio adapter terminal 331 receives the beacon signal Biii in the third layer from the second radio relay terminal 221, performs synchronization of the clock with that of the second radio relay terminal 221 and transmits a link connection request signal to the second radio relay terminal 221. For example, when the radio adapter terminal 331 receives the beacon signal Biii in a beacon reception slot 421 in an upper slot 42 of No. X-base slot 40, it transmits a link connection request signal 50 (see Fig. 7A) in a lower calling slot 402a in a link connection slot 422 (see Fig. 3A) following the beacon reception slot 421. At this time, the number of (the number of times of transmission) of the repeated frames 51 of the link connection request signal 50 is n = 5. The radio adapter terminal 331 receives a response signal which permits link connection from the second radio relay terminal 221 in an upper response/ upper calling slot 402b (see Fig. 3B) following lower calling slot 402a. Thus, a radio link connection between the second radio relay terminal 221 and the radio adapter terminal 331 is established (in Fig. 10, connection of the radio link is indicated by "L").

Then, the radio adapter terminal 331 transmits a join request signal Sd indicating that a final destination is the radio access point terminal 101, to the second radio relay terminal 221 with which the radio link connection is established to request relay transmission. The radio adapter terminal 331 transmits the join request signal Sd in a data communication slot 423 (see Fig. 3A) following the upper response/upper calling slot 402b (link connection slot 422) in which the response signal has been received. The join request signal Sd includes a frame signal (layer 3 frame as will be described later) to be relay-transmitted to the final destination and route information from the radio adapter terminal 331. This route information contains a slot position information dt0.

As described above, unlike the radio relay terminal 201, the radio adapter terminal 301 intermittently performs reception carrier sense operation (standby operation of reception) once in every several slots instead of every base slot 40. Therefore, the radio adapter terminal 331 intermittently performs reception carrier sense operation (reception operation of reception), too. When the radio adapter terminal 331 newly joins the system, it must receive a join permission signal Sa from the radio access point terminal 101. The radio access point terminal 101 creates the join permission signal Sa based on the join request signal Sd transmitted from the radio adapter terminal 331, and transmits the join permission signal Sa to the radio adapter terminal 331 via the radio relay terminal 201. Because of this, it is desired that the radio relay terminal 201 transmit the join permission signal Sa according to the intermittent reception carrier sense operation in the radio adapter terminal 331.

To this end, the route information contains information indicating a slot number of the base slot 40 of a timing (carrier sense timing Cs, see Figs. 6 and 8) at which the radio adapter terminal 331 performs the reception carrier sense operation, i.e., slot position information dt0. In other words, the slot position information dt0 corresponds to the slot number of the timing (intermittent reception timing) at which the radio adapter terminal 331 intermittently awaits reception of the join permission signal Sa from the radio access point terminal 101. The timing information transmission section 24 of the radio adapter terminal 331 creates and transmits the slot position information dt0. The slot position information dt0 is information used to identify the intermittent reception timing of the radio adapter terminal 331, and therefore can be said as "intermittent reception timing information. Information relating to the slot position information dt0 is stored in the memory section 14 as described above.

Receiving the join request signal Sd from the radio adapter terminal 331, the timing information analyzing section 26 of the second radio relay terminal 221 analyses the route information contained in the join request signal Sd. The timing information analyzing section 26 newly creates route information based on a result of the analysis. This route information contains relay terminal information dr2 relating to the second radio relay terminal 221 in addition to the slot position information dt0 created in the radio adapter terminal 331. The second radio relay terminal 221 incorporates the created route information into the join request signal Sd, and transmits the join request signal Sd to the first radio relay terminal 211.

Receiving the join request signal Sd from the second radio relay terminal 221, the timing information analyzing section 26 of the first radio relay terminal 211 analyses the route information, like the second radio relay terminal 221. The timing information analyzing section 26 newly creates the route information based on a result of the analysis. This route information contains relay terminal information dr1 relating to the first radio relay terminal 211 in addition to the slot position information dt0, the relay terminal information dr2 relating to the second radio relay terminal 221. The first radio relay terminal 211 incorporates the created route information into the join request signal Sd and transmits the join request signal Sd to the radio access point terminal 101.

As described above, the timing information transmission section 24 of the radio adapter terminal 331 as the transmission source creates the slot position information dt0 and incorporates the slot position information dt0 into the route information. The timing information analyzing section 26 of the radio relay terminal 201 present between the lower device as the transmission source and the upper device as the final destination creates the route information in such a manner that the relay terminal information (dr1, dr2) of the radio relay terminal 201 is incorporated into the route information. Therefore, the route information contains the information relating to the relay route of the join request signal Sd and information (intermittent reception timing information, slot position information dt0 in Fig. 10) of the timing at which the radio adapter terminal 331 intermittently awaits reception of the join permission signal Sa sent back in response to the join request signal Sd.

Receiving the join request signal Sd from the first radio relay terminal 211, the route information analyzing/ creating section 23 of the radio access point terminal 101 analyzes the route information like the second radio relay terminal 221 and the first radio relay terminal 211. The route information contains the relay terminal information dr1, dr2. By analyzing the relay terminal information dr1, dr2, the relay route from the radio access point terminal 101 to the radio adapter terminal 331, can be known. The radio access point terminal 101 creates the join permission signal Sa based on the join request signal Sd. The route information (containing slot position information dt0 and relay terminal information dr1, dr2) is incorporated into the join permission signal Sa. This route information is created by the route information analyzing/creating section 23 of the radio access point terminal 101 and incorporated into the join permission signal Sa. Information (containing slot position information dt0 and relay terminal information dr1, dr2) relating to the route information is stored in the memory section 14 of the radio access point terminal 101.

As shown in Fig. 10, the radio access point terminal 101 transmits the created join permission signal Sa to the first radio relay terminal 211. As described above, the first radio relay terminal 211 analyzes the route information (slot position information dt0 and relay terminal information dr1, dr2, etc.) contained in the received join permission signal Sa, newly creates route information (slot position information dt0 and relay terminal information dr2), incorporates the route information into the join permission signal Sa, and transmits the join permission signal Sa to the second radio relay terminal 221.

As described above, the second radio relay terminal 221 analyzes the route information contained in the received join permission signal Sa, newly creates route information, incorporates the route information into the join permission signal Sa, and transmits the join permission signal Sa to the radio adapter terminal 331. At this time, the route information contains the slot position information dt0. Therefore, the second radio relay terminal 221 transmits the join permission signal Sa according to the intermittent reception timing (timing at which the radio adapter terminal 331 awaits reception intermittently) in the radio adapter terminal 331 based on the slot position information dt0 (in Fig. 10, the intermittent reception timing is depicted as the carrier sense timing Cs). Therefore, the radio adapter terminal 331 can receive the join permission signal Sa according to an appropriate timing at which, for example, a noise or the like is less.

As described above, when the radio adapter terminal 331 newly joins the system, the radio adapter terminal 331 decides the slot position (slot position information dt0) of the intermittent reception timing at which the radio adapter terminal 331 awaits the join permission signal Sa sent back from the radio access point terminal 101. Thereby, the join permission signal Sa is transmitted from the upper device according to the intermittent reception timing of the radio adapter terminal 331. Therefore, the radio adapter terminal 331 is held in a standby state until the (intermittent reception timing (base slot 40 which becomes the carrier sense timing Cs) decided by the radio adapter terminal 331 arrives.

As a result, it is not necessary to increase the number of times of the reception carrier sense operation or change a cycle of the reception carrier sense operation to receive the join permission signal Sa. This makes it possible to suppress an increase in electric power consumption more effectively and receive the join permission signal Sa according to a suitable timing. Therefore, a reception capability can be further improved.

Although in the example of Fig. 10, the link connection operation is performed only when the radio adapter terminal 331 transmits the join request signal Sd, the link connection operation is actually performed in response to the join request signals Sd transmitted from the second radio relay terminal 221 and the first radio relay terminal 211. Likewise, the link connection operation is performed in response to the join permission signal Sa transmitted. That is, in the example of Fig. 10, only the case where the link connection operation performed when the radio adapter terminal 331 transmits the join request signal Sd is shown, and another link connection operation is omitted.

An outline of management of the route information in each radio communication device in the radio communication system will be described. Initially, the radio adapter terminal 301 manages only the slot position information dt0 of the radio relay terminal 201 as the upper device thereof (the second radio relay terminal 221 in the case of the radio adapter terminal 331). Then, the radio relay terminal 201 manages in the form of a table the radio relay terminal 201 (lower device, e.g., the second radio relay terminal 221 from the perspective of the first radio relay terminal 211) immediately below itself. Specifically, the radio relay terminal 201 has the table used for managing the radio relay terminal 201 (lower device) to be managed by itself. This table is configured such that table numbers correspond to the radio relay terminals 201 (lower devices), respectively, to be managed. The radio access point terminal 101 manages the slot position information dt0 of the radio adapter terminal 301 and table numbers of the radio relay terminals 201 present in relay routes from the radio adapter terminal 301 to the radio access point terminal 101.

## (II. **Configuration of data communication signal)**

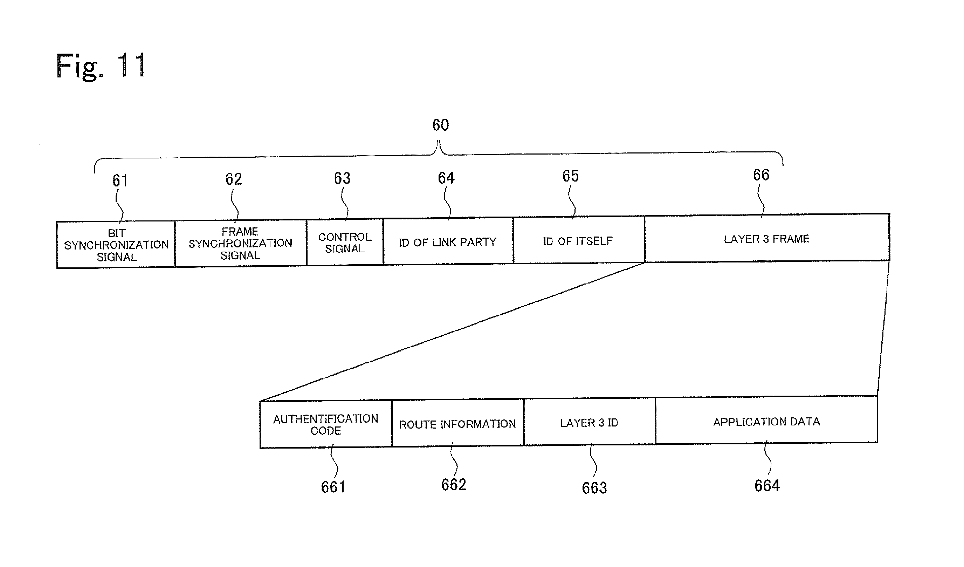

The join request signal Sd transmitted from the radio adapter terminal 331 (lower device) to the radio access point terminal 101 (upper device) and the join permission signal Sa sent back from the radio access point terminal 101 (upper device) to the radio adapter terminal 331 (lower device) have the same format. The join request signal Sd and the join permission signal Sa are data communication signals 60 communicated in data communication slots 423 (see Fig. 3A) of the base slots 40. Therefore, these radio signals and another radio signals basically have the same telegram format. Accordingly, a detail of the data communication signal 60 will be described specifically with reference to Fig. 11.

As shown in Fig. 11, the data communication signal 60 (join request signal Sd, join permission signal Sa, and another signal) is composed of a bit synchronization signal 61, a frame synchronization signal 62, a control signal 63, a link party ID 64, a ID 65 of the associated radio communication device, and a layer 3 frame 66.

The bit synchronization signal 61 is a signal used to decide a sampling position of a bit. The frame synchronization signal 62 is a signal used to detect a head of data contained in the data communication signal 60. The control signal 63 is a signal describing control information. The control signal 63 also contains information of a signal length from a head of the link party ID 64 to a tail of the layer 3 frame 66. In the radio communication device as the upper device which has received data communication signal 60, the control signal 63 is analyzed to know up to which portion of the data communication signal 60 should be received.

The link party ID 64 is an ID of a party to which the data communication signal 60 is transmitted, i.e., party with which link connection is established. If the data communication signal 60 is transmitted from the radio adapter terminal 331, the link party ID 64 is an ID of the second radio relay terminal 221. The ID 65 of the associated radio communication device is an TD of a transmission source of the data communication signal 60. If the transmission source is the radio adapter terminal 331, the ID 65 of the associated radio communication device is an ID of the radio adapter terminal 331.

The layer 3 frame 66 is a frame signal used to relay-transmit the data communication signal 60 to the final destination. Another signal and ID of the data communication signal 60 are created according to a combination of the lower device and the upper device which transmit/receive the data communication signal 60 and transmitted. The layer 3 frame 66 is transmitted from the radio adapter terminal 331 as the transmission source (first transmission source) to the radio access point terminal 101 as the final destination via the first radio relay terminal 211 and the second radio relay terminal 221.

As shown in Fig. 11, the layer 3 frame 66 is composed of an authentification code 661, route information 662, a layer 3ID 663, and application data 664. The authentification code 661 is a code used to check whether or not the layer 3 frame 66 is a correct frame. The route information 662 is information of relay routes from the radio adapter terminal 331 to the radio access point terminal 101. The route information 662 is created by the first radio relay terminal 211 and the second radio relay terminal 221 which are present between the radio adapter terminal 331 and the radio access point terminal 101 and is incorporated into the layer 3 frame 66. The layer 3ID 663 is ID of the radio adapter terminal 331 as the transmission source. The application data 664 is data relating to application which is to be transmitted to the radio access point terminal 101 as the final destination.

(III. **Configuration of route information**)

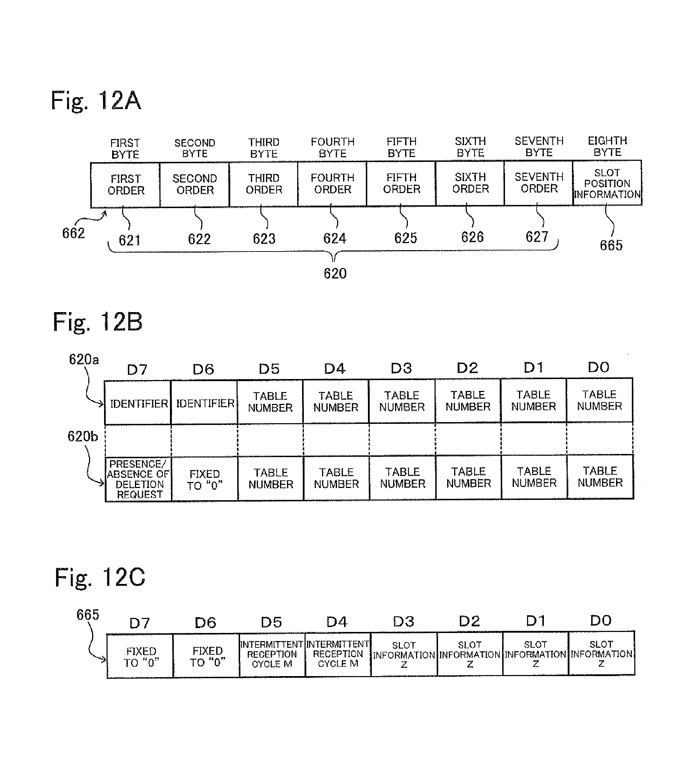

The route information 662 contained in the layer 3 frame 66 will be described specifically with reference to Figs. 12A to 12C. As shown in Fig. 12A, the route information 662 is composed of 8 bytes. Relay terminal information 620 (corresponding to relay terminal information dr1, dr2 in Fig. 10) are stored from first byte to seventh byte and slot position information 665 (corresponding to slot position information dt0 in Fig. 10) is stored in eighth byte.

The relay terminal information 620 is information relating to the radio relay terminals 201 present on relay routes from the radio adapter terminal 331 as the first transmission source of the data communication signal 60 to the radio access point terminal 101 as the final destination, and its size is 8 bits. In the example of Fig. 2, the radio relay terminals 201 are the first radio relay terminal 211 and the second radio relay terminal 221. The route information 662 can contain the relay terminal information 620 up to seventh order at maximum.

As shown in Fig. 12A, first-order relay terminal information 621 is stored in first byte of the route information 662. In the example shown in Fig. 2, information of the first radio relay terminal 211 in the first order from the perspective of the radio access point terminal 101 is stored as the first-order relay terminal information 621. Second-order relay terminal information 622 is stored in second byte of the route information 662. In the example shown in Fig. 2, information of the second radio relay terminal 221 in the second order from the perspective of the radio access point terminal 101 is stored as the second-order relay terminal information 622. From third byte to seventh byte, third-order relay terminal information 623, fourth-order relay terminal information 624, fifth-order relay terminal information 625, sixth-order relay terminal information 626, and seventh-order relay terminal information 627 are stored, respectively.

A bit configuration of the relay terminal information 620 will be described specifically. As shown in Fig. 12B, there is a difference in a portion of the bit configuration between a case where the route information 662 is transmitted from the upper device to the lower device and a case where the route information 662 is transmitted from the lower device to the upper device. The join request signal Sd transmitted from the radio adapter terminal 331 to the radio access point terminal 101 is the data communication signal 60 transmitted from the lower device to the upper device. The join permission signal Sa transmitted from the radio access point terminal 101 to the radio adapter terminal 331 is the data communication signal 60 transmitted from the upper device to the lower device. Therefore, there is a difference in a portion of the bit configuration of the route information 662 between these data communication signals 60.

Relay terminal information 620a at the upper side of Fig. 12B corresponds to the case where it is transmitted from the lower device to the upper device (join request signal Sd, etc.). A data bit D7 of the relay terminal information 620a is an identifier used to identify whether or not a table to be managed by the radio relay terminal 201 has reached a limit. As described above in conjunction with the management of the route information 662, the radio relay terminal 201 manages the radio relay terminals 201 (lower devices) below it in the form of the table. The radio relay terminal 201 identifies whether or not the number of the radio relay terminals 201 to be managed has reached an upper limit based on the identifier.

Relay terminal information 620b at the lower side of Fig. 12B corresponds to the case where it is transmitted from the upper device to the lower device (join permission signal, etc.). A data bit D7 of the relay terminal information 620b indicates whether or not there is a deletion request of a table number owned by each of the radio relay terminals 201. This deletion request is performed by the radio access point terminal 101. That is, the table owned in the radio relay terminal 201 is configured such that the table number corresponds to the radio relay terminal 201 (lower device) to be managed. The identifier is used to identify delete the table number in response to the request from the radio access point terminal 101 and exclude a particular radio relay terminal 201 (lower device) from managed targets.

A data bit D6 of the relay terminal information 620a at the upper side is an identifier for identifying whether or not the corresponding radio relay terminal 201 is initially registered in the table in a state in which the radio relay terminal 201 (lower device) immediately below it is not registered yet. On the other hand, a data bit D6 of the relay terminal information 620b at the lower side is fixed to "0".

In each of the relay terminal information 620a at the upper side and the relay terminal information 620b at the lower side, data bits D5 ~ D0 are table numbers of the radio relay terminals 201 (lower devices) to be managed which are present in relay routes. In the present embodiment, up to table number "63" can be managed. That is, except for the table number "0", 63 radio relay terminals 201 from the table number "1" to "63" can be managed.

More specifically, as shown in Fig. 2, the radio communication system is constructed as three layers, the radio relay terminals 201 include three radio relay terminals 201 which are the first radio relay terminal 211, the second radio relay terminal 221, and the third radio relay terminal 231. The table number of the first radio relay terminal 211 is stored in first byte of the route information 662. The table number of the second radio relay terminal 221 is stored in second byte of the route information 662. The table number "0" is stored in third byte of the route information 662. This is because no radio relay terminal 201 which is the lower device is connected to the third radio relay terminal 231. The table number "0" is stored in fourth and the following bytes of the route information 662.

In other words, when the radio communication system is constructed as w (w: natural number) layers, the number of the plurality of radio relay terminals 201 (i.e., the number of relays) included in the radio communication system is w. Therefore, the table number of the radio relay terminals 201 in first to (w - 1)-th orders are stored in first to (w - 1)-the bytes, among first to seventh bytes of the route information 662. The table number of the w-th radio relay terminal 201 is stored in w-th byte. The w-th radio relay terminal 201 is the lowermost relay terminal and does not require a table number. Therefore, "0" is stored as the table number.

As described above, the relay terminal information 620 are stored from first byte to seventh byte of the route information 662 and slot position information 665 is stored in eighth byte of the route information 662. The slot position information 665 means a slot number (slot position) in which the radio adapter terminal 331 as the transmission source of the data communication signal 60 awaits reception of the radio signal from the second radio relay terminal 221 immediately above the radio adapter terminal 331. As described above, the radio adapter terminal 301 which is a lower terminal performs the operation for awaiting reception of the radio signal, i.e., the reception carrier sense operation, in a skip manner, to reduce electric power consumption. To this end, the slot position information 665 is stored in eighth byte to perform the reception carrier sense information. A sixth of the slot position information 665 is 8 bits.

A bit configuration of the slot position information 665 will be specifically described. As shown in Fig. 12C, unlike the relay terminal information 620, the bit configuration of the slot position information 665 is basically the same between the case where the route information 662 is transmitted from the upper device to the lower device and the case where the route information 662 is transmitted from the lower device to the upper device.

Specifically, as shown in Fig. 12C, in the slot position information 665, data bit D7 and data bit D6 are fixed as "0". Also, data bit D5 and data bit D4 indicate intermittent reception cycles M of the lower device. The intermittent reception cycle M refers to a cycle in which the lower device performs the reception carrier sense operation with respect to the upper device. For example, in a case where the lower device is the radio relay terminal 201, normally, it performs the reception carrier sense operation in every base slot 40, and therefore the intermittent reception cycle M = 1. By comparison, in a case where the lower device is the radio adapter terminal 331, it performs the reception carrier sense operation once in every four base slots 40, and therefore the intermittent reception cycle M = 4. In a case where the lower device performs the reception carrier sense operation once in every two base slots 40, the intermittent reception cycle M = 2.

Numeric values stored in the data bit D5 and the data bit D4 are not the intermittent reception cycles M, but are binary values of Ma values having the following correspondence:

$$M = 1 \dots Ma = 0, M = 2 \dots Ma = 1, M = 4 \dots Ma = 2, M = 8 \dots Ma = 4.$$

That is, the intermittent reception cycle M is set as four patterns of "1", "2", "4" and "8".

In the case where the route information 662 is transmitted from the upper device to the lower device, the intermittent reception cycles M of the data bit D5 and of the data bit D4 each indicates "intermittent reception cycle M of the lower device which is the final destination from the perspective of the upper device". By comparison, in the case where the route information 662 is transmitted from the lower device to the upper device, the intermittent reception cycles M of the data bit D5 and of the data bit D4 each indicates "intermittent reception cycle M of the lower device which is the calling source".

Data bits D3 ~ D0 of the slot position information 665 indicate slot information Z used for deriving slot number Y in which center polling is performed. Since the center polling is a radio communication request from the upper device to the lower device, the slot number Y in which center polling is performed means slot number Y in which reception of the radio signal from the radio relay terminal 201 as the upper device is intermittently awaited (reception carrier sense operation is performed). When this slot number Y is referred to as "standby slot number Y" for easier explanation, slot information Z indicates slot number of (z - 1)-th base slot 40 starting from reference slot number Y0. A range of Z is Z = 1 ~ M.

The reference slot number Y0 is defined by the following formula(1). "A" in formula (1) is any one of integers (any one of integers of A = 0 ~ (n - 1)/M) derived by dividing (0 to slot number 255 (n - 1)) by the intermittent reception cycle M.

$$Y0 = (A \times M) + 1 \dots (1)$$

More specifically, the reference slot number Y0 is slot number 1, slot number M + 1, slot number 2M + 1, slot number 3M + 1...., and exists for every M slots. Therefore, the standby slot number Y, i.e., the slot number of the base slot 40 in which the corresponding radio communication device is actually awaiting reception is represented by the following formula (2). The slot information Z is any one of integers 1 ~ M as described above.

$$Y = Y0 + (Z - 1) \dots (2)$$

If the radio access point terminal 101 receives two information which are the intermittent reception cycle M and the slot information Z of the radio adapter terminal 331, it creates route information table of the radio adapter terminal 331. The values of the intermittent reception cycle M are desirably a value common to the radio communication devices constituting the radio communication system but may be different values between the radio adapter terminals 301. The slot information Z can be set as any value in each radio adapter terminals 301.

**(IV. Example of creation and management of route information)**

One example of creation and management of the route information 662 having the above configuration in the radio communication system of Fig. 2 will be specifically described. The route information 662 created in the radio adapter terminal 331 consist of only the slot position information 665 of eighth byte, because no radio relay terminal 201 intervenes. Therefore, "0 X 00" is incorporated into the relay terminal information 620 (first-order relay terminal information 621 to seventh-order relay terminal information 627) from first byte to seventh byte. If the transmission source of the route configuration 662 (data communication signal 60 containing the route configuration 662) is the radio relay terminal 201, i.e., the radio relay terminal 201 newly joins the radio communication system, "0 X FF" is incorporated into the relay terminal information 620 from first byte to seventh byte.

The route information 662 created in the radio adapter terminal 331 is incorporated into the data communication signal 60 and transmitted to the second radio relay terminal 221. Receiving the data communication signal 60 from the radio adapter terminal 331, the second radio relay terminal 221 analyzes the route information 662 contained therein. Specifically, the second radio relay terminal 221 analyzes byte corresponding to the order of itself in the route information 662. The second radio relay terminal 221 is the second-order radio relay terminal 201 from the perspective of the radio access point terminal 101, and therefore analyzes second byte (see Fig. 11A) of the route information 662. If a result of the analysis is "0X00", the second radio relay terminal 221 interprets that there was a relay request (data communication signal 60 was transmitted) from any one of the radio adapter terminals 301 among the lower devices belonging to the third layer, i.e., any one of the radio adapter terminals 331~333.

If there was a relay request from any one of the radio adapter terminals 331~333, the second radio relay terminal 221 sets table number "0" in the byte corresponding to the order to which the second radio relay terminal 221 belongs. The second radio relay terminal 221 is in the second order as described above, and the transmission source is the radio adapter terminal 331. Therefore, the second radio relay terminal 221 sets table number "0" in data bits D5 ~ D0 (see upper side in Fig. 12A) of second byte. And, the second radio relay terminal 221 incorporates "0XFF" into data bits D5 ~ D0 (see upper side in Fig. 11B) of first byte, corresponding to a relay number of one-upper order.

If a result of the analysis of the route information 662 is "0XFF", the second radio relay terminal 221 interprets that there was a relay request from the radio relay terminal 201 among the lower devices belonging to the third layer, i.e., third-order radio relay terminal 231 (third radio relay terminal 231) of Fig. 2. In this case, the second radio relay terminal 221 sets the table number corresponding to the radio relay terminal 231 in the byte (data bits D5 ~ D0 of second byte) of the order to which the second radio relay terminal 221 belongs. If there is no relay terminal information 620 in the table managed by the second radio relay terminal 221 even though there was a relay request from the third-order radio relay terminal 231, the second radio relay terminal 221 registers the radio relay terminal 231 in the table and sets the registered table number in the byte (data bits D5 ~ D0 of second byte) of the order to which the second radio relay terminal 221 belongs.

The route information 662 analyzed and created by the second radio relay terminal 221 is incorporated into the data communication signal 60 and transmitted to the first radio relay terminal 211. As in the second radio relay terminal 221, the first radio relay terminal 211 analyzes and creates the route information 662. Since the first radio relay terminal 211 is the upper device in the second layer (i.e., first-order relay device), it analyzes first byte. Since the first byte is "0XFF", the first radio relay terminal 211 interprets that there was a relay request from the radio relay terminal 201 among the lower devices belonging to the second layer, i.e., second-order radio relay terminal 221 (second radio relay terminal 221) of Fig. 2. Since the first radio relay terminal 221 corresponds to the first-order radio relay terminal 201 from the perspective of the radio access point terminal 101, it sets the table number corresponding to the second radio relay terminal 221 in data bits D5 ~ D0 of first byte of the route information 662.

The route information 662 analyzed and created by the first radio relay terminal 211 is incorporated into the data communication signal 60 and transmitted to the radio access point terminal 101. The radio access point terminal 101 analyzes the route information 662 and confirms the relay route up to the radio adapter terminal 331. The table number corresponding to ID of second radio relay terminal 221 which is managed by the first radio relay terminal 211 is stored in first byte of the route information 662, and the table number "0" is stored in second byte of the route information 662. From this, it is clear which of the radio adapter terminals 301 as the lower devices of the second radio relay terminal 221 the transmission source of the data communication signal 60 is.

The slot position information 665 including the intermittent reception cycle M and the slot information Z of the radio adapter terminal 331 as the transmission source is stored in eighth byte of the route information 662. The ID of the radio adapter terminal 331 as the transmission source is known from layer 3 ID 663.

In the above described manner, the radio access point terminal 101 can know the relay routes to the radio adapter terminal 331 from the data communication signal 60 transmitted from the radio adapter terminal 331. At a time point when the radio adapter terminal 331 has newly joined the radio communication system, the data communication signal 60 is transmitted to the radio access point terminal 101. Therefore, the radio access point terminal 101 can know the relay route in first communication without relay transmission (relay communication) between the radio access point terminal 101 and the radio adapter terminal 331 many times. Since the route information 662 contained in the data communication signal 60 has the above described configuration, the radio access point terminal 101 can create the route information table and appropriately know the relay routes by analyzing the route information 662.

**[Transmission of polling data]**

Next, a case where the radio access point terminal 101 transmits polling data to the radio adapter terminal 301 will be described with reference to Fig. 2.

If a transmission request of the polling data to, for example, the radio adapter terminal 331 is generated, the radio access point terminal 101 creates the route information 662 including the relay routes up to the radio adapter terminal 331, the intermittent reception cycle M and the slot information Z of the radio adapter terminal 331, with reference to the route information table owned by the radio access point terminal 101. The route information 662 is incorporated into the layer 3 frame 66 of the polling signal (see Fig. 12) as the data communication signal.

The radio access point terminal 101 transmits the link connection request signal (see Fig. 7A) directed to the first radio relay terminal 211, in the upper response/upper calling slot 402b in the link connection slot 412 of the lower slot 41. The first radio relay terminal 211 performs the reception carrier sense operation in all of the upper slots 42 (to be precise, upper response/upper calling slots 402b), and therefore can quickly receive the link connection request signal transmitted from the radio access point terminal 101 and directed to the first radio relay terminal 211.

Thereafter, the first radio relay terminal 211 receives the polling signal transmitted from the radio access point terminal 101, in the data communication slot 423 of the upper slot 42, and checks the layer 3ID 663 contained in the layer 3 frame 66 of the polling signal, and determines whether or not the polling signal is directed to the first radio relay terminal 211. If it is determined that the polling signal is not directed to the first radio relay terminal 211, the first radio relay terminal 211 determines that there is a relay request and analyzes first byte (see Fig. 12A) of the route information 662.

If the table number stored in the data bits D5 ~ D0 of first byte is "0" as a result of the analysis of the route information 662, it is determined that the received polling signal is directed to the radio adapter terminal 301 present immediately below the first radio relay terminal 211. This polling signal is directed to the radio adapter terminal 331. Therefore, the table number stored in the data bits D5 ~ D0 of first byte is the table number corresponding to the ID of the second radio relay terminal 221. Therefore, the first radio relay terminal 211 knows the ID of the second radio relay terminal 221 which is a next relay destination with reference to the table owned by the first radio relay terminal 211, from the table number stored in the data bits D5 ~ D0 of first byte.

Thereafter, the first radio relay terminal 211 performs the link connection operation with the second radio relay terminal 221 according to the same procedure as that in the case of the radio access point terminal 101, and relay-transmits the polling signal to second radio relay terminal 221. Like the first radio relay terminal 211, the second radio relay terminal 221 analyzes the route information 662 of the received polling signal and checks the table number stored in the data bits D5 ~ D0 of second byte of the route information 662. Since the table number stored in the data bits D5 - D0 of second byte is "0", the second radio relay terminal 221 recognizes that the received polling signal is directed to any one of the radio adapter terminals 331~333 present immediately below the second radio relay terminal 221. In addition, the second radio relay terminal 221 checks the layer 3ID663 (see Fi g. 12) in the polling signal, to check the ID of the radio adapter terminal 331 which is the final destination.

Furthermore, the second radio relay terminal 221 analyzes the slot position information 665 of eighth byte of the route information 662, and checks the intermittent reception cycle M and the slot information Z of the radio adapter terminal 331. As described above, the slot number of the base slot 40 in which the reception carrier sense operation is performed can be calculated from the intermittent reception cycle M and the slot information Z. Therefore, the second radio relay terminal 221 performs the link connection operation with the radio adapter terminal 331, according to the calculated slot number and relay-transmits the polling signal.

The layer 3 frame 66 (see Fig. 12) of the polling signal is created in the radio access point terminal 101 and is relay-transmitted to the radio adapter terminal 331 as the final destination without being changed in the first radio relay terminal 211 and the second radio relay terminal 221, which are the relay devices. Therefore, the radio adapter terminal 331 can surely receive application data 664 from the radio access point terminal 101.

As described above, in the present embodiment, in the radio communication system including the radio access point terminal 101, the plurality of radio relay terminals 201, and the plurality of radio adapter terminals 301, in which the plurality of radio relay terminals 201 are configured to performs relay-transmission in multiple layers, when the radio communication from the lower device to the upper device (upper direction communication) is performed, the radio relay terminal 201 which performs relay-transmission transmits the beacon signal from itself to the lower device to perform synchronization of the clocks, and then performs the link connection with the lower device immediately thereafter in the lower slots 41 of the base slot 40 (see Fig. 5). Also, the radio relay terminal 201 receives the beacon signal from the upper device, and then performs the link connection with the upper device immediately thereafter, in the upper slot 42 just after the lower slot 41 in which the link connection is performed (see Fig. 5).

Thereby, in the upper direction communication, the radio relay terminal 201 performs the link connection just after it transmits/receives the beacon signals and enters a state in which it can communicate with the upper device and the lower device. Therefore, a significant delay in the relay-transmission can be suppressed. According to the timing when the radio adapter terminal 301 transmits the terminal calling data, the upper radio relay terminal 201 (e.g., second radio relay terminal 221) enters a reception state. When the radio relay terminal 201 receives the terminal calling data, the upper radio relay terminal 201 (e.g., first radio relay terminal 211) enters a reception state. Thus, according to the timing when the radio adapter terminal 301 transmits the terminal calling data, the upper radio relay terminals 201 enter a state in which they can perform relay-transmission. As a result, an activation time of the radio adapter terminal 301 can be reduced, and hence an increase in electric power consumption in the radio adapter terminal 301 can be suppressed with a simple configuration.

In the case where the radio communication is performed in the direction from the upper device to the lower device (lower direction communication is performed), the radio relay terminal 201 performs the reception carrier sense operation in the upper slots 42 without fail (see link connection slots 422 of black color symbols in first radio relay terminal 211 and second radio relay terminal 221 in Fig. 5), and performs the reception carrier sense operation only just after it transmits the beacon signal in the lower slots 41 (see link connection slots 412 of black color symbols in first radio relay terminal 211 and second radio relay terminal 221 in Fig. 5). The radio adapter terminal 301 does not perform the reception carrier sense operation in all of the base slots 40 (only upper slots 42 because no lower device exists), but performs the reception carrier sense operation in only some of the upper slots 42. The radio relay terminal 201 (e.g., second radio relay terminal 221) as the upper device of the radio adapter terminal 301 performs the link connection according to the reception carrier sense operation of the radio adapter terminal 301.

As a result, an activation time of the radio adapter terminal 301 can be reduced, and hence an increase in electric power consumption in the radio adapter terminal 301 can be suppressed with a simple configuration. The radio relay terminal 201 can transmit the radio signal promptly to the lower device after receiving the radio signal from the upper device, except for the lower direction communication to the radio adapter terminal 301. Therefore, a delay in the relay-transmission in the lower direction communication as well in the upper direction communication can be avoided, and the radio signal sent back from the radio access point terminal 101 which has received the terminal calling data can be relay-transmitted promptly.

In the present embodiment, the slot number of the base slot 40 corresponding to the intermittent reception timing in the radio adapter terminal 301 is incorporated into the radio signal and transmitted in communication with respect to the radio access point terminal 101. Because of this, the radio relay terminal 201 has only to own the table used for managing only the radio relay terminals 201 (lower devices) present immediately below itself, and need not own information relating to the radio adapter terminals 301 present immediately below itself. Therefore, the radio relay terminal 201 of the present embodiment need not impose a limitation on the number of radio adapter terminals 301 immediately below itself, and can relay more radio adapter terminals 301 than a conventional radio communication system. In other words, the radio relay terminal 201 of the present embodiment can reduce a size of the table owned by itself even when it relays radio adapter terminals 301 as many as those in the conventional radio communication system.

In addition, the radio access point terminal 101 of the present embodiment has only to directly manage the radio relay terminals 201 present immediately below itself, and therefore can reduce a size of the table in which the route information 662 up to the radio adapter terminal 301 is stored. For example, the radio access point terminal 101 needs to manage the ID of the first radio relay terminal 211 present immediately below it, but may manage the table number of the second radio relay terminal 221 managed by the first radio relay terminal 211, instead of directly managing the ID of the second radio relay terminal 221 which is not immediately below itself. When a maximum number of radio relay terminals 201 to be managed by each radio relay terminal 201 is 63, then the number of necessary tables is 63. Therefore, it is sufficient that the table number is information of 6 bits. Therefore, in the conventional radio communication system, one radio relay terminal 201 needs to manage information of 64 bits, whereas in the preset embodiment, one radio relay terminal 201 needs to manage information of 6 bits.

The route information 662 incorporated into the data communication signal is not ID of the radio relay terminal 201 present in the relay route but the table number corresponding to the ID. This makes it possible to reduce a byte number of the route information 662. When a maximum number of radio relay terminals 201 to be managed by each radio relay terminal 201 is 63, then the relay route corresponding to one order can be set using information of 6 bits.

In general, as the ID used to identify the radio communication device, for example, information of 64 bits is known. Thus, there is a tendency that the bit number (bits) increases. Therefore, if IDs of all of radio relay terminals 201 present in the relay routes are transmitted as the route information 662, bit number of the route information 662 is tremendous, which results in waste in communication. By comparison, in the present embodiment, since the table number is transmitted as the route information 662, the bit number of the route information 662 can be reduced, and thus efficient communication can be performed.

Although in the present embodiment, the radio access point terminal 101 manages the slot position information 665 of the radio adapter terminal 331 in such a manner that the slot position information 665 is stored in the memory section 14, the second radio relay terminal 221 immediately above the radio adapter terminal 331 can manage the slot position information 665. In this case, the table of the second radio relay terminal 221 increases in size, but the slot position information 665 of eighth byte of the route information 662 can be advantageously omitted.

**[modified example, typical uses, etc.]**

The above described embodiment is applicable to a general radio communication device or to a general radio communication system. Therefore, the specific configuration of the radio communication device and the specific configuration of the radio communication system are not limited to the configurations shown in Figs. 1A to 1C or Fig. 2, but are applicable to known radio communication devices and known radio communication systems having various configurations.

Although the radio access point terminal, the radio relay terminal, and the radio adapter terminal are used as the radio communication devices constructing the radio communication system, the present invention is not limited to this. The relationship between the radio adapter terminal and the radio relay terminal is the same as the relationship between the radio adapter terminal and the radio access point terminal. Therefore, the radio communication system may be composed of two kinds of radio communication devices which are the radio access point terminal and the radio adapter terminal.

A communication operation performed by the radio access point terminal, the radio relay terminal, and the radio adapter terminal is implemented by programs for operating a computer and by cooperating hard resources such as an electric device, an inform device, and/or a computer. By storing these programs in a storage medium or distributing the programs using communication lines, the programs can be distributed, updated, installed, etc., in an easy manner.

Although in the present embodiment, the "slot position information" which is the slot number in which reception is awaited intermittently is used as the intermittent reception timing information contained in the route information, the present invention is not limited to this, and known other format information can be used so long as it can identify the intermittent reception timing (intermittent standby timing of reception), instead of the slot number.

The radio communication device, the radio communication system, the radio communication method, the programs, etc., of the present embodiment are configured as being applicable to general radio communication fields. In particular, they can be suitably used in fields in which electric power saving is demanded in radio adapter terminals as the lower terminals. As a typical example of this, there is a gas meter reading system.

In general, gas meters are operative by a battery power supply without a change for a very long period of time (typically, 10 years) and AC power supplies are seldom built into them. Because of this, radio communication devices (radio adapter terminals) attached to the gas meters are required to be battery-driven for 10 years, for example. Therefore, the radio communication device awaits reception in specified cycles. If an electric wave directed to the radio communication device cannot be detected, the radio communication device performs intermittent standby operation in which it immediately stops reception (attempt of reception) and shifts to a standby state. Meter reading of the gas meter need not be performed frequently, and once per day at most. Because of this, the radio communication does not occur frequently.

In view of communication frequency, a typical radio meter reading system for a gas meter uses a method in which radio communication devices which perform communication with each other perform intermittent reception operation asynchronously without synchronizing their clocks, i.e., "asynchronous method." In this method, only when information to be transmitted occurs, this information is affixed with a header signal longer than an intermittent reception cycle of the communication party and transmitted. The communication party can detect the header signal longer than the intermittent reception cycle. Upon detection of the header signal, the communication party can continue reception and receive the information transmitted subsequently to the header signal.

In recent years, to achieve cost reduction, a method is employed in which radio relay terminals are provided and perform radio communication with many radio adapter terminals such that one radio relay terminal corresponds to a plurality of radio adapter terminals, so that one radio access point terminal gathers meter reading values of many gas meters. In this configuration, because of the radio relay terminals intervening, the radio relay terminals are required to perform relay-transmission without a delay to enable prompt data communication from the radio adapter terminal to the radio access point terminal.

The radio adapter terminal intermittently awaits the reception. Therefore, the (upper) radio relay terminal which is in the immediately upper layer of the radio adapter terminal is required to perform relay-transmission according to the intermittent reception timing of the radio adapter terminal. In a case where a plurality of radio relay terminals are provided in multiple layers to perform relay-transmission in multiple layers, the radio relay terminals are required to perform relay-transmission between them efficiently. The intermittent awaiting of the radio adapter terminal, and provision of the radio relay terminals provided in multiple layers cause a delay in transmission of the terminal calling data from the radio adapter terminal to the radio access point terminal.

On the other hand, in the present invention, the radio relay terminal performs the link connection just after it transmits/receives the beacon signal, and enters a state in which it can communicate with the upper device and the lower device. This can suppress a significant delay in the relay-transmission, and realize quick relay-transmission. According to the timing when the radio adapter terminal transmits the terminal calling data, the upper radio relay terminal and the upper radio relay terminal enter a communicable state. According to the timing when the radio adapter terminal transmits the terminal calling data, the radio relay terminals enter a state in which they can perform relay-transmission. As a result, an activation time of the radio adapter terminal can be reduced, and hence an increase in electric power consumption in the radio adapter terminal can be suppressed with a simple configuration.

Although in the above described example, gas flow rate data (gas meter reading data) is gathered automatically from the gas meter, the present invention is not limited to this, and may be applied to a system for meter-reading of a flow rate of tap water, electricity or the like.

A radio communication system of the present invention relates to a radio communication system including a radio access point terminal, a radio adapter terminal and a plurality of radio relay terminals intervening between the radio access point terminal and the radio adapter terminal, and when the radio relay terminal closer to the radio access point terminal is "upper radio relay terminal" among the radio relay terminals and the radio relay terminal communicating with the "upper radio relay terminal" and being closer to the radio adapter terminal is "lower radio relay terminal" among the radio relay terminals, the upper radio relay terminal and the lower radio relay terminal are able to transmit a radio signal at a timing defined as a unit slot composed of a lower slot and an upper slot, and perform radio communication by repeating the unit slot, the lower slot includes a slot (beacon transmission slot) in which the upper radio relay terminal is able to transmit the beacon signal to the lower radio relay terminal and is configured to transmit the beacon signal in fixed cycles using the beacon transmission slot, and the upper slot includes a slot (beacon reception slot) in which the lower radio relay terminal receives the beacon signal transmitted from the upper radio relay terminal, and a time period that elapses from a time point when the upper radio relay terminal transmits the beacon signal until the lower radio relay terminal transmits the beacon signal may be set longer than a time period from a time point when the lower radio relay terminal transmits the beacon signal until the upper radio relay terminal transmits the beacon signal.

In accordance with this configuration, the radio relay terminal receives the terminal calling data transmitted from the radio adapter terminal just after its transmits the beacon signal, receives the beacon signal transmitted from the radio access point terminal just after it receives the terminal calling data, and then relay-transmits the terminal calling data to the radio access point terminal just after it receives the beacon signal. This makes it possible to avoid a significant delay in the relay-transmission of the terminal calling data.

Each of the radio relay terminal and the radio adapter terminal is configured to perform the intermittent reception awaiting operation to receive the radio signal from the upper device, the intermittent reception awaiting cycle of the radio adapter terminal may be longer than the intermittent reception cycle of the radio relay terminal.

In accordance with this configuration, the radio relay terminal performs intermittent reception awaiting (intermittent reception awaiting operation) of polling data from the radio access point terminal in cycles shorter than cycles of the second beacon signal transmitted from the radio access point terminal. Therefore, the relay-transmission of the polling data can be performed without a significant delay.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

**Industrial Applicability**

As described above, the present invention is used suitably in fields of radio (wireless) communication systems such as a short-distance radio communication network, a mobile communication, a local area network, a transportation radio, a municipal disaster management network, wireless LAN, and radio meter reading systems for meters of gas, tap water, electric power, etc., and radio communication devices for use in these systems.

**Preference Sings Lists**

> 11 antenna
> 12 transmission/reception section
> 13 control section
> 14 memory section
> 21 beacon transmission section
> 22 link connection section
> 23 route information analyzing/creating section
> 24 timing information transmission section
> 25 beacon reception section
> 26 timing information analyzing section
> 40 base slot
> 41 lower slot
> 42 upper slot
> 101 radio access point terminal (radio communication device)
> 201 radio relay terminal (radio communication device)
> 211 first radio relay terminal (radio communication device)
> 221 second radio relay terminal (radio communication device)
> 301 radio adapter terminal (radio communication device)
> 331 radio adapter terminal (radio communication device)
> 411 beacon transmission slot
> 412 link connection slot
> 421 beacon reception slot
> 422 link connection slot
> Ta first beacon transmission interval
> Tb second beacon transmission interval

**Claims**

1. A radio communication system comprising:

   a plurality of radio communication devices including a plurality of radio adapter terminals which are in a lowermost layer, a radio access point terminal in an uppermost layer which performs radio communication with the radio adapter terminals, and a radio relay terminal which intervenes between the radio adapter terminals and the radio access point terminal, and performs communication with the radio adapter terminals and the radio access point terminal;
   wherein each of the radio access point terminal and the radio relay terminal is configured to transmit a beacon signal regularly to a radio communication device in a lower layer of the radio access point terminal and the radio relay terminal, each of the radio relay terminal and the radio adapter terminals is configured to regularly receive the beacon signal transmitted from a radio communication device in an upper layer of the radio relay terminal and the radio adapter terminal, and synchronize an internal clock of each of the radio relay terminal and the radio adapter terminals with an internal clock of the radio communication device in the upper layer;
   when a time period that elapses from an initial upper beacon transmission time point which is a time point when the radio access point terminal or the radio relay terminal transmits the beacon signal until a lower beacon transmission time point which is a time point when the radio relay terminal in a lower layer of the radio access point terminal or the radio relay terminal transmits the beacon signal, firstly after the initial upper beacon transmission time point is a first beacon transmission interval, and
   a time period that elapses from the lower beacon transmission time point until a subsequent upper beacon transmission time point which is a time point when the radio access point terminal or the radio relay terminal in an upper layer of the radio relay terminal in the lower layer transmits the beacon signal, firstly after the lower beacon transmission time point is a second beacon transmission interval,
   the first beacon transmission interval is set longer than the second beacon transmission interval.

**2.** The radio communication system according to Claim 1,

wherein the radio communication performed between the radio communication device in the upper layer and the radio communication device in the lower layer is performed cyclically by repeating one cycle divided into a plurality of time slots;

wherein each of the time slots is composed of a lower slot in which the radio communication with the radio communication device in the lower layer is performed, and an upper slot following the lower slot, the radio communication with the radio communication device in the upper layer being performed in the upper slot;

wherein the lower slot includes a beacon transmission slot in which the beacon signal is transmitted, and a link connection slot following the beacon transmission slot, a link connection with the radio communication device in the lower layer being performed in the link connection slot;

wherein the upper slot includes a beacon reception slot in which the beacon signal is received, and a link connection slot following the beacon reception slot, a link connection with the radio communication device in the upper layer being performed in the link connection slot;

wherein when the radio relay terminal which is in the upper layer of the radio adapter terminal is a reference terminal, a cycle of the radio communication of the radio communication device in the upper layer, a cycle of the radio communication of the reference terminal, and a cycle of the radio communication of the radio adapter terminal are set such that the lower slot of the reference terminal corresponds to the upper slot of the radio adapter terminal, and the upper slot of the reference terminal corresponds to the lower slot of the radio communication device in the upper layer.

**3.** The radio communication system according to Claim 2, wherein

wherein the radio relay terminal is configured to perform link connection in the lower slot in which the radio relay terminal transmits the beacon signal; and

wherein when the radio communication device in an upper layer of the reference terminal is the radio relay terminal, a cycle of the radio communication of the radio relay terminal in the upper layer, a cycle of the radio communication of the reference terminal, and a cycle of the radio communication of the radio adapter terminal are set such that the lower slot in which the reference terminal performs the link connection corresponds to the upper slot in which the radio adapter terminal performs link connection, and the upper slot of the reference terminal corresponds to the lower slot in which the radio relay terminal in the upper layer performs link connection.

**4.** The radio communication system according to Claim 2,

wherein the radio adapter terminal is configured to perform link connection once in every plural upper slots; and

wherein a cycle of the radio communication of the reference terminal and a cycle of the radio communication of the radio adapter terminal are set such that the lower slot of the reference terminal corresponds to the upper slot in which the radio adapter terminal performs link connection in a most recent time.

**5.** The radio communication system according to Claim 4,

wherein the radio relay terminal other than the radio relay terminal in an upper layer of the radio adapter terminal is configured to perform link connection between the lower slot of the radio relay terminal other than the radio relay terminal in the upper layer and the upper slot of the radio communication device in a lower layer of the radio relay terminal other than the radio relay terminal in the upper layer, just after the link connection is performed between the lower slot of the radio communication device in an upper layer of the radio relay terminal other than the radio relay terminal in the upper layer and the upper slot of the radio relay terminal other than the radio relay terminal in the upper layer.

**6.** The radio communication system according to Claim 1,

wherein each of the radio relay terminal and the radio adapter terminal is configured to regularly perform an intermittent reception awaiting operation to receive the radio signal from the radio access point terminal or the radio relay terminal in an upper layer, and an intermittent reception awaiting cycle of the radio adapter terminal is longer than an intermittent reception cycle of the radio relay terminal.

Fig. 1A

Fig. 1B

Fig. 1C

# Fig. 2

Fig. 3A

Fig. 3B

# Fig. 4

U: UPPER, L: LOWER

EP 2 629 437 A1

# Fig. 5

EP 2 629 437 A1

# Fig. 6

DATA TRANSMISSION
REQUES

⬇ Ds                                                    40

101

| RADIO ACCESS POINT TERMINAL | 256 | 1 | 2 | 3 | 4 | 5 |
|---|---|---|---|---|---|---|
| | L | U | L | U | L | U | L | U | L | U | L | U |

L/D | LINK CONNECTION & DATA COMMUNICATION    41         42

211

| RADIO RELAY TERMINAL | 255 | 256 | 1 | 2 | 3 | 4 |
|---|---|---|---|---|---|---|
| | L | U | L | U | L | U | L | U | L | U | L | U |

L/D | LINK CONNECTION & DATA COMMUNICATION

221

| RADIO RELAY TERMINAL | 253 | 254 | 255 | 256 | 1 | 2 |
|---|---|---|---|---|---|---|
| | L | U | L | U | L | U | L | U | L | U | L | U |

LINK CONNECTION & DATA COMMUNICATION | L/D

331

| RADIO ADAPTER TERMINAL | 252 | 253 | 254 | 255 | 256 | 1 |
|---|---|---|---|---|---|---|
| | L | U | L | U | L | U | L | U | L | U | L | U |

⬆ Cs
CARRIER SENSE
TIMING

U: UPPER, L: LOWER

## Fig. 7A

T7 ( = n × T6 )

| REPEATED FRAME n | REPEATED FRAME n−1 | REPEATED FRAME n−2 | ..... | REPEATED FRAME 2 | REPEATED FRAME 1 | BODY FRAME |
|---|---|---|---|---|---|---|

51    51    51      51    51    52

50

## Fig. 7A

T6

| BIT SYNCHRONIZATION SIGNAL | FRAME SYNCHRONIZATION SIGNAL | CONTROL SIGNAL | SIMPLIFIED ID |
|---|---|---|---|

511     512     513     514

51

EP 2 629 437 A1

# Fig. 8

EP 2 629 437 A1

# Fig. 9

101

RADIO ACCESS
POINT
TERMINAL

40

| 2 | | 3 | | 4 | | 5 | | 6 | | 7 | |
|---|---|---|---|---|---|---|---|---|---|---|---|
| L | U | L | U | L | U | L | U | L | U | L | U |

Bi(3) ↕ L/D

41      42

211

RADIO
RELAY
TERMINAL

| 1 | | 2 | | 3 | | 4 | | 5 | | 6 | |
|---|---|---|---|---|---|---|---|---|---|---|---|
| L | U | L | U | L | U | L | U | L | U | L | U |

Bii(2) ↕ L/D

221

RADIO
RELAY
TERMINAL

| 254 | | 256 | | 1 | | 2 | | 3 | | 4 | |
|---|---|---|---|---|---|---|---|---|---|---|---|
| L | U | L | U | L | U | L | U | L | U | L | U |

Biii(1) ↕ L/D

331

RADIO
ADAPTER
TERMINAL

| 254 | | 255 | | 256 | | 1 | | 2 | | 3 | |
|---|---|---|---|---|---|---|---|---|---|---|---|
| L | U | L | U | L | U | L | U | L | U | L | U |

⇧ Ds
DATA TRANSMISSION
REQUEST

U: UPPER, L: LOWER

# Fig. 10

EP 2 629 437 A1

# Fig. 11

60

| 61 | 62 | 63 | 64 | 65 | 66 |
|---|---|---|---|---|---|
| BIT SYNCHRONIZATION SIGNAL | FRAME SYNCHRONIZATION SIGNAL | CONTROL SIGNAL | ID OF LINK PARTY | ID OF ITSELF | LAYER 3 FRAME |

| AUTHENTIFICATION CODE | ROUTE INFORMATION | LAYER 3 ID | APPLICATION DATA |
|---|---|---|---|
| 661 | 662 | 663 | 664 |

## Fig. 12A

| FIRST BYTE | SECOND BYTE | THIRD BYTE | FOURTH BYTE | FIFTH BYTE | SIXTH BYTE | SEVENTH BYTE | EIGHTH BYTE |
|---|---|---|---|---|---|---|---|
| FIRST ORDER | SECOND ORDER | THIRD ORDER | FOURTH ORDER | FIFTH ORDER | SIXTH ORDER | SEVENTH ORDER | SLOT POSITION INFORMATION |
| 621 | 622 | 623 | 624 | 625 | 626 | 627 | 665 |

662

620

## Fig. 12B

620a

| D7 | D6 | D5 | D4 | D3 | D2 | D1 | D0 |
|---|---|---|---|---|---|---|---|
| IDENTIFIER | IDENTIFIER | TABLE NUMBER | TABLE NUMBER | TABLE NUMBER | TABLE NUMBER | TABLE NUMBER | TABLE NUMBER |

620b

| PRESENCE/ ABSENCE OF DELETION REQUEST | FIXED TO "0" | TABLE NUMBER | TABLE NUMBER | TABLE NUMBER | TABLE NUMBER | TABLE NUMBER | TABLE NUMBER |
|---|---|---|---|---|---|---|---|

## Fig. 12C

665

| D7 | D6 | D5 | D4 | D3 | D2 | D1 | D0 |
|---|---|---|---|---|---|---|---|
| FIXED TO "0" | FIXED TO "0" | INTERMITTENT RECEPTION CYCLE M | INTERMITTENT RECEPTION CYCLE M | SLOT INFORMATION Z | SLOT INFORMATION Z | SLOT INFORMATION Z | SLOT INFORMATION Z |

## INTERNATIONAL SEARCH REPORT

| International application No. |
| --- |
| PCT/JP2011/004994 |

A. CLASSIFICATION OF SUBJECT MATTER
*H04B7/15*(2006.01)i, *H04W16/26*(2009.01)i, *H04W28/06*(2009.01)i, *H04W56/00* (2009.01)i, *H04W74/06*(2009.01)i

According to International Patent Classification (IPC) or to both national classification and IPC

B. FIELDS SEARCHED

Minimum documentation searched (classification system followed by classification symbols)
H04B7/14-7/26, H04W4/00-99/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2002-077978 A (Matsushita Electric Industrial Co., Ltd.), 15 March 2002 (15.03.2002), fig. 2, 9 (Family: none) | 1-6 |
| A | JP 7-38492 A (Nippondenso Co., Ltd.), 07 February 1995 (07.02.1995), fig. 4, 7 (Family: none) | 1-6 |
| A | JP 9-65420 A (Nippon Telegraph and Telephone Corp.), 07 March 1997 (07.03.1997), fig. 1, 3, 4 (Family: none) | 1-6 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 October, 2011 (05.10.11) | 18 October, 2011 (18.10.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 629 437 A1**

**Patent documents cited in the description**

- JP 2009288897 A